# EUROPÄISCHE PATENTANMELDUNG

(11) **EP 4 164 205 A1**
(43) Veröffentlichungstag der Anmeldung: **12.04.2023**
(21) Anmeldenummer: 22200056.4
(22) Anmeldetag: 06.10.2022
(51) Int. Cl.: H04N 5/222, H04N 5/262, H04N 5/265, H04N 5/275, H04N 23/90

(54) **HINTERGRUND-WIEDERGABEEINRICHTUNG**

(30) Priorität: 11.10.2021 DE 102021126313
(71) Anmelder: Arnold & Richter Cine Technik GmbH & Co. Betriebs KG, 80807 München (DE)
(72) Erfinder: POPP, Hermann, 81547 München (DE)
(74) Vertreter: Manitz Finsterwald Patent- und Rechtsanwaltspartnerschaft mbB

(57) **Zusammenfassung**

Eine Hintergrund-Wiedergabeeinrichtung für ein virtuelles Bildaufnahmestudio ist dazu ausgebildet, für eine Aufnahme mittels einer zugeordneten Kamera hinter einem realen Motiv eine Darstellung eines virtuellen Hintergrunds wiederzugeben, und weist zumindest ein Paneel mit einer Vielzahl aktiv leuchtender Bildpunktelemente in einer zweidimensionalen Anordnung und eine Steuerschaltung auf. Die Steuerschaltung ist dazu ausgebildet, die Bildpunktelemente alternierend zum Wiedergeben zumindest eines Teils der Darstellung des virtuellen Hintergrunds und zum Wiedergeben eines Referenzbildes anzusteuern, welches nicht den virtuellen Hintergrund repräsentiert, wobei die Steuerschaltung einen Referenzbildspeicher aufweist, in welchem das Referenzbild speicherbar ist.

## Beschreibung

Die Erfindung betrifft eine Hintergrund-Wiedergabeeinrichtung für ein virtuelles Bildaufnahmestudio, welche dazu ausgebildet ist, für eine Aufnahme mittels einer zugeordneten Kamera hinter einem realen Motiv eine Darstellung eines virtuellen Hintergrunds wiederzugeben.

Derartige Hintergrund-Wiedergabeeinrichtungen können insbesondere dazu vorgesehen sein, in einem Bildaufnahmestudio eine Landschaft oder eine Umgebung wiederzugeben, in welcher eine Aufnahme mittels einer zugeordneten Kamera erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine virtuelle Umgebung geschaffen werden, in welcher sich ein Schauspieler während einer Bewegtbildaufnahme bewegen oder welche einen Hintergrund für eine Stillbildaufnahme bilden kann. Der im vorliegenden Zusammenhang genannte virtuelle Hintergrund kann somit ein Hintergrundmotiv repräsentieren, dessen Darstellung von einer zugeordneten Kamera als scheinbar reale Umgebung einer (Vordergrund-)Szene unmittelbar aufgenommen werden kann. Die Darstellung des virtuellen Hintergrunds "hinter" einem realen Motiv ist in diesem Zusammenhang umfassend zu verstehen, da die virtuelle Umgebung auch oberhalb oder unterhalb des realen Motivs vorgesehen sein kann.

Beispielsweise bei Bewegtbildaufnahmen kann eine Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige an einem Dreh beteiligte Personen kann bzw. können bereits während des Drehs einen Gesamteindruck der Szene gewinnen und die Szene beurteilen. Zudem können die gesamte Szene oder ein entsprechender Ausschnitt eines Films unmittelbar nach der Aufnahme angesehen und überprüft werden, ohne dass der für die Szene vorgesehene Hintergrund noch überlagert werden muss.

Bei Stillbildaufnahmen kann eine derartige Hintergrund-Wiedergabeeinrichtung beispielsweise dazu genutzt werden, in einem Bildaufnahmestudio und somit in einem kontrollierbaren Umfeld Fotografien in grundsätzlich beliebigen Umgebungen aufnehmen zu können und während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann das aufgenommene Foto unmittelbar angesehen werden, um gegebenenfalls erforderliche Anpassungen vornehmen zu können.

Zum Wiedergeben der Darstellung des virtuellen Hintergrunds können Hintergrund-Wiedergabeeinrichtungen insbesondere ein elektronisches Display mit einer aktiven Pixelmatrix bilden oder aufweisen und beispielsweise eine aktive Beleuchtungseinrichtung mit einer Vielzahl von Leuchtelementen umfassen. Beispielsweise kann zur Wiedergabe einer Darstellung eines virtuellen Hintergrunds in einem virtuellen Bildaufnahmestudio eine LED-Wand zum Einsatz kommen, deren Leuchtdioden individuell und/oder in Gruppen benachbarter Leuchtdioden bzw. in Arrays von Leuchtdioden ansteuerbar sein können. Leuchtdioden einer solchen LED-Wand können als beispielsweise als LED (Light Emitting Diode) oder als OLED (Organic Light Emitting Diode bzw. organische Leuchtdiode) vorgesehen sein. Ferner können die Leuchtdioden Teil einer Flüssigkristallanzeige sein. Derartige Hintergrund-Wiedergabeeinrichtungen können sich beispielsweise über eine Breite von mindestens 5 m und eine Höhe von mindestens 2 m erstrecken, um mehrere Schauspieler vor einem gemeinsamen (virtuellen) Hintergrund aufnehmen zu können.

Darüber hinaus können Hintergrund-Wiedergabeeinrichtungen mehrere Paneele umfassen, an welchen die Bildpunktelemente angeordnet sind und welche gemeinsam die LED-Wand bilden. Während die Paneele, für welche auch der Begriff Panel geläufig ist, im Wesentlichen zweidimensional ausgebildet sein und sich die an einem Paneel angeordneten Bildpunktelemente in einer flächigen Anordnung erstrecken können, kann durch eine geeignete Anordnung mehrerer Paneele beispielsweise erreicht werden, dass die Hintergrund-Wiedergabeeinrichtung abschnittsweise gekrümmt und/oder gewölbt ausgebildet ist. Dadurch kann die Hintergrund-Wiedergabeeinrichtung beispielsweise sowohl hinter als auch über oder unter dem realen Motiv in dem virtuellen Bildaufnahmestudio angeordnet werden, um auch das unmittelbare Aufnehmen einer Darstellung eines virtuellen Himmels, oder einer virtuellen Decke eines Raums oder eines virtuellen Bodens in dem Bildaufnahmestudio zu ermöglichen. Alternativ zu einer LED-Wand kann eine Darstellung eines virtuellen Hintergrunds grundsätzlich auch durch Lichtpunkte erzeugt werden, die durch Reflektion oder Transmission an einer Lichtquellen-Wand, beispielsweise einer Leinwand für eine Rückprojektion, erzeugt werden. Die aktive Lichterzeugung kann dazu durch einen Projektor erfolgen, wobei an der Leinwand die Lichtquellen lediglich indirekt gebildet sind.

Insbesondere kann es eine derartige Hintergrund-Wiedergabeeinrichtung ermöglichen, durch entsprechendes Ansteuern der Bildpunktelemente einen virtuellen Hintergrund, der insbesondere eine dreidimensionale Szene repräsentieren kann, bildlich dazustellen und/oder durch Verändern der Ansteuerung während einer Aufnahme anzupassen. Eine Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern.

Zusätzlich zu dem Wiedergeben einer Darstellung eines virtuellen Hintergrunds kann es bei solchen Hintergrund-Wiedergabeeinrichtungen vorgesehen sein, zwischen der Wiedergabe der sich gegebenenfalls zeitlich ändernden Darstellung des virtuellen Hintergrunds auch statische Bilder an der Hintergrund-Wiedergabeeinrichtung einzublenden. Solche statischen Bilder können beispielsweise zyklisch an der Hintergrund-Wiedergabeeinrichtung wiedergegeben werden, um beispielsweise zusätzlich zu der Darstellung des virtuellen Hintergrunds zu einem bestimmten Zeitpunkt auch eine Green-Screen-Aufnahme mittels der Hintergrund-Wiedergabeeinrichtung erstellen und in einem Bilddatensatz speichern zu können. Darüber hinaus kann es vorgesehen sein, beispielsweise zyklisch die Hintergrund-Wiedergabeeinrichtung vollständig hell oder vollständig dunkel zu schalten, um einen Alpha-(a-) Kanal in einer von der Kamera in dem virtuellen Bildaufnahmestudio erzeugten Abbildung generieren zu können.

Beispielsweise kann es hinsichtlich der Ansteuerung einer solchen Hintergrund-Wiedergabeeinrichtung vorgesehen sein, dass der virtuelle Hintergrund von einem 3D-Rechner generiert wird, welcher den virtuellen Hintergrund und/oder die wiederzugebenden Darstellungen des virtuellen Hintergrunds an weitere Steuereinheiten der Hintergrund-Wiedergabeeinrichtung übermittelt. Zudem kann der 3D-Rechner dazu vorgesehen sein, zu bestimmten und/oder festgelegten Zeitpunkten, beispielsweise periodisch, anstelle einer Darstellung des virtuellen Hintergrunds ein statisches Bild zu übermitteln, so dass statische Bild an der Hintergrund-Wiedergabeeinrichtung eingeblendet werden kann. Eine solche Ansteuerung kann sich jedoch verhältnismäßig rechenintensiv und komplex gestalten, da die statischen Bilder zeitlich exakt und hochfrequent den jeweiligen zu übermitteltenden Darstellungen des virtuellen Hintergrunds beigemischt und insbesondere über den gesamten Datenpfad ausgehend von dem 3D-Rechner bis zu der Wiedergabe an der Hintergrund-Wiedergabeeinrichtung übertragen werden müssen.

Es ist daher eine Aufgabe der Erfindung, eine Hintergrund-Wiedergabeeinrichtung zu schaffen, welche ein vereinfachtes Einblenden solcher statischer Bilder ermöglicht.

Diese Aufgabe wird gelöst durch eine Hintergrund-Wiedergabeeinrichtung mit den Merkmalen des Anspruchs 1.

Die Hintergrund-Wiedergabeeinrichtung weist zumindest ein Paneel mit einer Vielzahl aktiv leuchtender Bildpunktelemente in einer zumindest zweidimensionalen Anordnung und eine Steuerschaltung auf, wobei die Steuerschaltung dazu ausgebildet ist, die Bildpunktelemente alternierend zum Wiedergeben zumindest eines Teils der Darstellung des virtuellen Hintergrunds und zum Wiedergeben eines Referenzbildes anzusteuern, welches nicht den virtuellen Hintergrund repräsentiert. Ferner weist die Steuerschaltung einen Referenzbildspeicher auf, in welchem das Referenzbild speicherbar ist.

Insbesondere kann die Darstellung des virtuellen Hintergrunds einen Bildinhalt besitzen, welcher sich in Abhängigkeit von der in dem virtuellen Bildaufnahmestudio aufgenommenen Szene beispielsweise dynamisch ändern kann. Insbesondere kann hierzu eine zugeordnete Bildinhalt-Steuereinrichtung vorgesehen sein, welche dazu ausgebildet ist, sich dynamisch verändernde Darstellungen des virtuellen Hintergrunds an die Hintergrund-Wiedergabeeinrichtung zu übermitteln, wie nachstehend noch näher erläutert wird. Durch eine solche sich zeitlich ändernde Darstellung des virtuellen Hintergrunds können beispielsweise auch Bewegungen in dem virtuellen Hintergrund oder sich in dem virtuellen Hintergrund abspielende Hintergrundereignisse unmittelbar in dem virtuellen Bildaufnahmestudio dargestellt werden, so dass ein Schauspieler beispielsweise auf solche Hintergrundereignisse in dem virtuellen Hintergrund reagieren und das Schauspiel entsprechend anpassen kann. Zudem können die Hintergrundereignisse unmittelbar von der Kamera abgebildet werden.

Die Steuerschaltung der hierin offenbarten Hintergrund-Wiedergabeeinrichtung ist dazu vorgesehen, die Bildpunktelemente anzusteuern, um die Darstellung des virtuellen Hintergrunds an der Hintergrund-Wiedergabeeinrichtung wiedergeben zu können. Insbesondere kann die Steuerschaltung dazu ausgebildet sein, die Bildpunktelemente in Abhängigkeit von einer empfangenen Bildinformation bezüglich der Darstellung des virtuellen Hintergrunds - insbesondere einer von der vorstehend bereits erwähnten Bildinhalt-Steuereinrichtung generierten Bildinformation - anzusteuern, um die Darstellung mittels der Bildpunktelemente an der Hintergrund-Wiedergabeeinrichtung wiederzugeben. Die Steuerschaltung ist jedoch zusätzlich zum Ansteuern der Bildpunktelemente zum Wiedergeben der Darstellung des virtuellen Hintergrunds dazu ausgebildet, die Bildpunktelemente zum Wiedergeben des Referenzbildes anzusteuern. Insofern kann, in Abhängigkeit von der Ansteuerung der Bildpunktelemente durch die Steuerschaltung, an der Hintergrund-Wiedergabeeinrichtung die Darstellung des virtuellen Hintergrunds oder das Referenzbild wiedergegeben werden.

Das Referenzbild kann beispielsweise auch als statisches Bild bezeichnet werden, wobei sich der Inhalt des Referenzbildes insbesondere in aufeinanderfolgenden Wiedergabezyklen nicht oder gemäß einem vorbestimmten Wiederholungsschema ändern kann. Beispielsweise kann es vorgesehen sein, dass in zwei aufeinanderfolgenden von der zugeordneten Kamera erzeugten Abbildungen eine veränderte Darstellung des virtuellen Hintergrunds abgebildet ist, indem die Darstellung des virtuellen zwischen den Abbildungen verändert wird. Demgegenüber kann das Referenzbild jedoch stets unverändert bleiben, so dass beispielsweise aufeinanderfolgende Abbildungen des an der Hintergrund-Wiedergabeeinrichtung wiedergegebenen Referenzbildes -jedenfalls in dem Bereich der Abbildung, in welchem das Referenzbild und/oder die Hintergrund-Wiedergabeeinrichtung abgebildet ist - identisch sein können.

Indem das Referenzbild in dem Referenzbildspeicher der Steuerschaltung speicherbar ist, kann das Referenzbild gewissermaßen in dem Referenzbildspeicher vorgehalten werden, um nicht unmittelbar vor einer Wiedergabe erst an die Steuerschaltung übermittelt werden zu müssen. Der Referenzbildspeicher kann daher auch als Schattenregister bezeichnet werden, in welchem ein zu einem späteren Zeitpunkt einzublendendes Referenzbild bereits für eine Wiedergabe zur Verfügung steht, während an der Hintergrund-Wiedergabeeinrichtung beispielsweise noch die Darstellung des virtuellen Hintergrunds wiedergegeben wird. Insbesondere ist es somit nicht erforderlich, dass eine Bildinhalt-Steuereinrichtung oder ein 3D-Rechner zum Generieren des virtuellen Hintergrunds auch das Referenzbild zyklisch an die Steuerschaltung übermittelt, um eine Wiedergabe des Referenzbildes an der Hintergrund-Wiedergabeeinrichtung zu ermöglichen. Vielmehr kann die Steuerschaltung unmittelbar und beispielsweise zu festgelegten Zeitpunkten auf den Referenzbildspeicher zugreifen, um das Referenzbild bzw. die entsprechenden Bildinformationen auszulesen und an der Hintergrund-Wiedergabeeinrichtung wiederzugeben. Die Steuerung der Hintergrund-Wiedergabeeinrichtung kann dadurch insbesondere vereinfacht und beschleunigt werden, indem Übertragungszeiten zum Übertragen des Referenzbildes von einer Bildinhalt-Steuereinrichtung und/oder einem 3D-Rechner gespart werden können. Zudem kann insbesondere bei einer hohen Wiederholungsfrequenz der Einblendung des Referenzbildes auch die zu übertragende Datenmenge in gegebenenfalls relevanter Weise reduziert werden kann.

Die Hintergrund-Wiedergabeeinrichtung, welche eine Steuerschaltung zum Ansteuern der Bildpunktelemente mit einem Referenzbildspeicher zum Speichern eines Referenzbildes aufweist, ermöglicht somit auf einfache Weise, das Referenzbild oder gegebenenfalls mehrere Referenzbilder zyklisch an der Hintergrund-Wiedergabeeinrichtung wiederzugeben, ohne dass diese Referenzbilder aufwendig über einen langen Übertragungsweg übertragen werden müssen. Solche Referenzbilder können insbesondere dazu genutzt werden, zusätzliche Informationen hinsichtlich der Aufnahme in dem virtuellen Bildaufnahmestudio und/oder der von der Kamera erzeugten Abbildung der Darstellung des virtuellen Hintergrunds zu gewinnen, indem beispielsweise das Einblenden eines Referenzbildes eine Aufnahme vor einem Green-Screen, das Generieren eines Alpha-(a-) Kanals für die Abbildung und/oder eine Ermittlung der Position der Kamera ermöglichen kann, wie nachstehend noch näher erläutert ist.

Weitere Ausführungsformen sind den abhängigen Ansprüchen, der Beschreibung und den Zeichnungen zu entnehmen.

Bei einigen Ausführungsformen können die Hintergrund-Wiedergabeeinrichtung als eine LED-Wand und die Bildpunktelemente als Leuchtdioden oder Leuchtdiodeneinheiten ausgebildet sein. Die Leuchtdioden einer solchen LED-Wand können beispielsweise als LED (Light Emitting Diode) oder als organische Leuchtdioden bzw. OLED (Organic Light Emitting Diode) ausgebildet sein. Ferner kann es bei einer LED-Wand vorgesehen sein, dass die einzelnen Bildpunktelemente, welche gemeinsam die Darstellung des virtuellen Hintergrunds erzeugen, von einzelnen Leuchtdioden gebildet sind. Die einzelnen Bildpunktelemente können jedoch auch von jeweiligen Leuchtdiodeneinheiten gebildet sein, wobei jede Leuchtdiodeneinheit insbesondere mehrere, insbesondere drei, Leuchtdioden umfassen kann. Beispielsweise kann eine Leuchtdiodeneinheit auch drei, vier oder mehr Leuchtdioden umfassen, wobei die mehreren Leuchtdioden einer Leuchtdiodeneinheit insbesondere unterschiedliche Emissionsspektren aufweisen können und optional mit einem Farbmischer ausgestattet sein können. Ferner kann es bei einer solchen Leuchtdiodeneinheit vorgesehen sein, dass die einzelnen Leuchtdioden der Leuchtdiodeneinheit selektiv ansteuerbar sind, um eine gewünschte Farbe des von der Leuchtdiodeneinheit gebildeten Bildpunktelements zu erzeugen. Insbesondere kann eine Leuchtdiodeneinheit eine rotes Licht emittierende Leuchtdiode, eine grünes Licht emittierende Leuchtdiode und eine blaues Licht emittierende Leuchtdiode umfassen.

Bei einigen Ausführungsformen kann es ferner vorgesehen sein, dass die Bildpunktelemente individuell ansteuerbar sind, um die Darstellung des virtuellen Hintergrunds zu erzeugen. Insbesondere kann durch das Ansteuern der Bildpunktelemente eine jeweilige Farbe und/oder Helligkeit des Bildpunktelements einstellbar sein, um einen durch das jeweilige Bildpunktelement wiedergegebenen Abschnitt oder Punkt der Darstellung des virtuellen Hintergrunds auf die vorgesehene Farbe und/oder Helligkeit einstellen zu können.

Die Hintergrund-Wiedergabeeinrichtung kann sich bei einigen Ausführungsformen in einer vertikalen und/oder horizontalen Ausrichtung erstrecken, insbesondere mit kontinuierlichen oder quasi-kontinuierlichen Übergängen. Beispielsweise kann es vorgesehen sein, dass sich die Hintergrund-Wiedergabeeinrichtung in einer vertikalen Ausrichtung plan hinter dem realen Motiv erstreckt, um die Darstellung des virtuellen Hintergrunds hinter dem realen Motiv wiederzugeben. Alternativ oder zusätzlich kann es jedoch auch vorgesehen sein, dass sich die Hintergrund-Wiedergabeeinrichtung zumindest abschnittsweise in einer horizontalen Ausrichtung erstreckt, so dass die Darstellung des virtuellen Hintergrunds beispielsweise auch über dem realen Motiv wiedergegeben werden kann. Zudem kann die Hintergrund-Wiedergabeeinrichtung dazu ausgebildet sein, das reale Motiv zu umgeben und zu überdecken, um eine möglichst vollständige Wiedergabe des virtuellen Hintergrunds über einen großen Winkelbereich zu ermöglichen. In einem Abschnitt, in welchem die Hintergrund-Wiedergabeeinrichtung von einer vertikalen in eine horizontale Ausrichtung übergeht, kann die Hintergrund-Wiedergabeeinrichtung auch gewölbt und/oder gekrümmt sein. Insbesondere bei einer Zusammensetzung der Hintergrund-Wiedergabeeinrichtung aus mehreren Paneelen können die Paneele zu verschiedenen und beispielsweise gewölbeartigen Geometrien zusammengesetzt sein, um eine gewünschte Umgebung für eine Aufnahme in dem virtuellen Bildaufnahmestudio zu schaffen. Ferner kann es bei einigen Ausführungsformen vorgesehen sein, dass die Hintergrund-Wiedergabeeinrichtung abschnittsweise an einem Boden des virtuellen Bildaufnahmestudios angeordnet ist. Auch in solchen Abschnitten kann sich die Hintergrund-Wiedergabeeinrichtung insbesondere in einer horizontalen Ausrichtung erstrecken.

Die Hintergrund-Wiedergabeeinrichtung kann bei einigen Ausführungsformen ferner dazu ausgebildet sein, das reale Motiv zu beleuchten. Insbesondere kann dies Hintergrund-Wiedergabeeinrichtung dazu dienen, das reale Motiv zusätzlich zu einer sonstigen Beleuchtung des virtuellen Bildaufnahmestudios zu beleuchten. Beispielsweise kann dadurch erreicht werden, dass des reale Motiv einen zu erwarteten Schatten wirft, wenn in dem virtuellen Hintergrund Beleuchtungsquellen, beispielsweise eine Straßenlaterne, enthalten ist, indem von der wiedergegebenen Darstellung der Straßenlaterne des virtuellen Hintergrunds die von einer realen Straßenlaterne zu erwartende Beleuchtung des realen Motivs ausgeht. Die Hintergrund-Wiedergabeeinrichtung kann jedoch auch dazu ausgebildet sein, abschnittsweise Licht zur Beleuchtung einer Szene zu emittieren und gewissermaßen als Scheinwerfer zu fungieren, während die Hintergrund-Wiedergabeeinrichtung an anderen Abschnitten die Darstellung des virtuellen Hintergrunds wiedergeben kann.

Bei einigen Ausführungsformen kann die Hintergrund-Wiedergabeeinrichtung dazu ausgebildet sein, die Darstellung des virtuellen Hintergrunds während der Aufnahme zeitlich zu variieren. Insbesondere können dadurch in dem virtuellen Hintergrund ablaufende Ereignisse während einer Kameraaufnahme unmittelbar mittels der Hintergrund-Wiedergabeeinrichtung wiedergegeben werden, so dass ein Schauspieler, anders als beispielsweise bei einer Greenscreen-Aufnahme, auf diese Ereignisse reagieren und das Schauspiel darauf abstimmen kann. Die Hintergrund-Wiedergabeeinrichtung kann folglich insbesondere dazu ausgebildet sein, während der Kameraaufnahme eine Filmsequenz wiederzugeben, welche von der Kamera unmittelbar aufgezeichnet werden kann. Ein nachträgliches Überlagern der Aufnahme der Kamera mit einem vorgesehenen Hintergrund ist somit nicht mehr erforderlich.

Ferner kann sich die Hintergrund-Wiedergabeeinrichtung bei einigen Ausführungsformen über eine Breite von mindestens 5 m und eine Höhe von mindestens 2 m erstrecken. Insbesondere kann die Hintergrund-Wiedergabeeinrichtung dadurch eine ausreichende Größe aufweisen, um mehrere Schauspieler vor einem gemeinsamen (virtuellen) Hintergrund aufnehmen zu können.

Zudem kann es eine derart ausreichende Größe der Hintergrund-Wiedergabeeinrichtung beispielsweise ermöglichen, verschiedene reale Objekte, beispielsweise Möbel und/oder Sitzgelegenheiten, in dem virtuellen Bildaufnahmestudio zu positionieren und beispielsweise eine Filmszene unter Einbeziehung dieser realen Objekte und/oder mit sich bewegenden Schauspielern vor der Darstellung des virtuellen Hintergrunds aufzunehmen. Insbesondere kann sich die Darstellung des virtuellen Hintergrunds und/oder die Hintergrund-Wiedergabeeinrichtung über einen während einer typischen Aufnahme in dem virtuellen Bildaufnahmestudio, beispielsweise einer Aufnahme einer von Schauspielern gespielten Szene, von der Kamera abgebildeten Abschnitt hinaus erstrecken, so dass sich die Darstellung des virtuellen Hintergrunds beispielsweise in der von der Kamera erzeugten Abbildung bis zu sämtlichen Rändern der Abbildung erstrecken kann und nicht auf einen Innenabschnitt der Abbildung beschränkt ist.

Bei einigen Ausführungsformen kann der virtuelle Hintergrund eine dreidimensionale Szene repräsentieren. Beispielsweise kann es sich bei dem virtuellen Hintergrund um eine Landschaft oder einen Raum handeln, in welcher oder in welchem eine in dem virtuellen Bildaufnahmestudio aufzunehmende Szene spielt. Insbesondere kann die an der Hintergrund-Wiedergabeeinrichtung wiedergegebene Darstellung des virtuellen Hintergrunds und/oder ein an dem zumindest einen Paneel wiedergegebener Abschnitt der Darstellung des virtuellen Hintergrunds einer Projektion der dreidimensionalen Szene bzw. eines Abschnitts der dreidimensionalen Szene auf die zweidimensionale Anordnung der Bildpunktelemente entsprechen.

Die Steuerschaltung kann bei einigen Ausführungsformen dazu ausgebildet sein, sämtliche Bildpunktelemente des zumindest einen Paneels individuell anzusteuern. Alternativ dazu können die Bildpunktelemente des zumindest einen Paneels in mehrere Gruppen von Bildpunktelementen unterteilt sein, wobei die Steuerschaltung dazu ausgebildet sein kann, die Bildpunktelemente einer der mehreren Gruppen individuell anzusteuern.

Beispielsweise kann die Steuerschaltung als eine Paneel-Steuerung (auch als Panel-Controller bezeichnet) und dazu ausgebildet sein, sämtliche Bildpunktelemente des zumindest einen Paneels individuell anzusteuern. Dazu kann die Steuerschaltung beispielsweise unmittelbar mit sämtlichen Bildpunktelementen des zumindest einen Paneels verbunden sein, um die Bildpunktelemente direkt anzusteuern. Es kann jedoch auch vorgesehen sein, dass jedem der Bildpunktelemente oder jeweiligen Gruppen von Bildpunktelementen eine jeweilige Bildpunktelement-Steuereinrichtung, insbesondere ein LED-Treiber, zugeordnet ist, wobei die Steuerschaltung dazu ausgebildet sein kann, die Bildpunktelemente indirekt durch Ansteuern der jeweiligen zugeordneten Bildpunktelement-Steuereinrichtungen anzusteuern. Derartige Bildpunktelement-Steuereinrichtungen können zudem insbesondere als Treiber-Chips ausgebildet sein, um mehrere Bildpunktelemente ansteuern zu können.

Alternativ zu einer Ausbildung der Steuerschaltung als Paneel-Steuerung kann es jedoch auch vorgesehen sein, dass die Steuerschaltung dazu ausgebildet ist, die Bildpunktelemente einer jeweiligen von mehreren Gruppen von Bildpunktelementen individuell anzusteuern. Insofern kann die Steuerschaltung gegebenenfalls selbst als eine Bildpunktelement-Steuereinrichtungen und/oder als ein Treiber-Chip und/oder ein LED-Treiber ausgebildet sein, welcher von einer Paneel-Steuerung bzw. einem Panel-Controller angesteuert werden kann.

Somit kann es beispielsweise vorgesehen sein, dass die Hintergrund-Wiedergabeeinrichtung eine Paneel-Steuerung bzw. einen Panel-Controller mit einem Referenzbildspeicher aufweist, in welchem das Referenzbild speicherbar ist. Die Paneel-Steuerung kann beispielsweise von einer zentralen Steuerung der Hintergrund-Wiedergabeeinrichtung ansteuerbar sein, welche dazu ausgebildet sein kann, einen jeweiligen Abschnitt einer Projektion des virtuellen Hintergrunds auf die Hintergrund-Wiedergabeeinrichtung an die jeweiligen Paneel-Steuerungen eines oder mehrerer Paneele zu übermitteln. Insbesondere kann dies vorgesehen sein, wenn die Hintergrund-Wiedergabeeinrichtung mehrere zusammengesetzte Paneele umfasst, wobei jedem der Paneele eine jeweilige Paneel-Steuerung zugeordnet ist.

Alternativ dazu kann es jedoch auch vorgesehen sein, dass die Hintergrund-Wiedergabeeinrichtung eine Bildpunktelement-Steuereinrichtung aufweist, welche mit einem Referenzbildspeicher ausgebildet ist. Der Referenzbildspeicher kann somit insbesondere unmittelbar einer Bildpunktelement-Steuereinrichtung zugeordnet sein, welche die wiederzugebenden Bildinformationen direkt, ohne Zwischenschaltung einer weiteren Steuereinrichtung, an die jeweiligen Bildpunktelemente übermittelt. Bei einer Ausbildung einer Bildpunktelement-Steuereinrichtung mit einem Referenzbildspeicher kann insbesondere erreicht werden, dass das Referenzbild letztlich vor einer Wiedergabe überhaupt nicht oder allenfalls über einen minimalen Pfad übertragen werden muss, indem das Referenzbild an den die Bildpunktelemente unmittelbar ansteuernden Bildpunktelement-Steuereinrichtungen bereitgestellt werden kann.

Insbesondere kann der Referenzbildspeicher dem zumindest einen Paneel zugeordnet sein, so dass das Referenzbild nicht erst von einer zentralen Steuerung der Hintergrund-Wiedergabeeinrichtung und/oder einem 3D-Rechner zum Generieren des virtuellen Hintergrunds an das zumindest eine Paneel übermittelt und/oder auf einzelne Paneele verteilt und übermittelt werden muss.

Bei einigen Ausführungsformen kann das Referenzbild zumindest ein Muster aufweisen. Beispielsweise kann das Referenzbild ein geometrisches Muster aufweisen. Das Einblenden eines solchen Referenzbildes kann es beispielsweise ermöglichen, das Referenzbild als ein Trackingbild zu nutzen, um eine Position der zugeordneten Kamera in dem virtuellen Bildaufnahmestudio zu bestimmen. Dazu kann es beispielsweise vorgesehen sein, dass die zugeordnete und für die Abbildung der Darstellung des virtuellen Hintergrunds vorgesehenen Kamera selbst das Referenzbild abbildet, so dass durch Identifizieren der Muster in der von der Kamera erzeugten Abbildung und Bestimmen einer Lage der Muster in der Abbildung die Position der Kamera relativ zu dem Paneel und/oder der Hintergrund-Wiedergabeeinrichtung ermittelt werden kann. Dazu kann insbesondere eine Position der an der Hintergrund-Wiedergabeeinrichtung wiedergegebenen Muster bezogen auf das virtuelle Bildaufnahmestudio bestimmt und/oder bekannt sein, so dass durch Ermitteln der Lagen der Muster in der Abbildung, welche sich in Abhängigkeit von der Position und/oder der Ausrichtung der Kamera ändern kann, auf die Position der Kamera zurückgeschlossen werden kann. Die Hintergrund-Wiedergabeeinrichtung kann dazu beispielsweise eine Positionsermittlungseinrichtung aufweisen, welche dazu ausgebildet ist, die von der Kamera erzeugte Abbildung auszuwerten, um die Lagen der Muster in der Abbildung und die Position der Kamera in dem virtuellen Bildaufnahmestudio zu bestimmen. Die Abbildung kann für eine solche Positionsermittlung beispielsweise von der Kamera an eine Schnittstelle der Hintergrund-Wiedergabeeinrichtung übermittelbar sein. Insbesondere kann die Hintergrund-Wiedergabeeinrichtung dazu ausgebildet sein, den virtuellen Hintergrund und/oder die Darstellung des virtuellen Hintergrunds in Abhängigkeit von der Position der Kamera zu generieren und/oder wiederzugeben.

Alternativ dazu kann es jedoch auch vorgesehen sein, dass mit der zugeordneten Kamera eine Hilfskamera verbunden ist, welche dazu ausgebildet ist, das Referenzbild und die darin enthaltenen Muster abzubilden, so dass die Position der Hilfskamera anhand der Lage der Muster in der von der Hilfskamera erzeugten Abbildung und, insbesondere bei einem definierten Positionsunterschied zwischen der Hilfskamera und der zugeordneten Kamera, auch die Position der Kamera anhand dieser Lage ermittelt werden kann. Dies kann insbesondere eine Bestimmung der Position der zugeordneten Kamera ermöglichen, ohne dass die Muster beispielsweise die Abbildung der Darstellung des virtuellen Hintergrunds überlagern und/oder nachträglich entfernt werden müssen. Auch die Abbildung einer solchen Hilfskamera kann an die Hintergrund-Wiedergabeeinrichtung übermittelbar sein.

Ferner kann das Referenzbild bei einigen Ausführungsformen lediglich einfarbig, insbesondere Grün, Blau, Weiß oder Schwarz, sein. Das Referenzbild kann bei einigen Ausführungsformen auch lediglich zweifarbig sein, insbesondere Schwarz und Weiß. Insbesondere kann ein zweifarbiges Referenzbild ein schachbrettartiges Muster bilden.

Das Einblenden derartiger einfarbiger Referenzbilder kann es beispielsweise ermöglichen, bei der Verwendung einer Hintergrund-Wiedergabeeinrichtung zusätzlich zu Abbildungen der Darstellung des virtuellen Hintergrunds auch beispielsweise eine Green-Screen-Abbildung zu generieren, so dass der virtuelle Hintergrund gegebenenfalls in der Abbildung nachträglich ausgetauscht, ersetzt oder ergänzt werden kann. Zudem kann es vorgesehen sein, durch Einblenden eines hellen oder dunklen einfarbigen Referenzbildes, insbesondere also durch ein Wiedergeben weißen Lichts an allen Bildpunktelementen oder durch Ausschalten aller bzw. durch Stoppen einer Lichtemission aller Bildpunktelemente, einen Alpha-(a-) Kanal in einer von der zugeordneten Kamera erzeugten Abbildung der Hintergrund-Wiedergabeeinrichtung zu erzeugen. Ein solcher Alpha-(a-) Kanal kann gegebenenfalls auch durch ein an der Hintergrund-Wiedergabeeinrichtung wiedergegebenes und definiertes schwarz-weißes Muster erzeugt werden, so dass beispielsweise auch ein solches Muster als Referenzbild genutzt werden kann.

Ferner kann die Steuerschaltung dazu ausgebildet sein, die Bildpunktelemente zum Wiedergeben einer sich zeitlich verändernden Darstellung des virtuellen Hintergrunds anzusteuern.

Die Steuerschaltung kann bei einigen Ausführungsformen dazu ausgebildet sein, die Darstellung des virtuellen Hintergrunds mit einer vorgegebenen oder vorgebbaren Bildwechselfrequenz zu aktualisieren. Eine solche Bildwechselfrequenz kann beispielsweise auch als eine Frame-Rate der Hintergrund-Wiedergabeeinrichtung bezeichnet werden. Ferner kann die Bildwechselfrequenz mit einer Bildaufnahmefrequenz der zugeordneten Kamera synchronisiert sein, so dass die Bildwechselfrequenz der Hintergrund-Wiedergabeeinrichtung und die Bildaufnahmefrequenz der Kamera beispielsweise vor einer Aufnahme in dem virtuellen Bildaufnahmestudio aufeinander abgestimmt werden können. Durch eine solche Synchronisation kann erreicht werden, dass jeder von der Kamera erzeugten Abbildung eine jeweilige Darstellung des virtuellen Hintergrunds zugeordnet ist und beispielsweise Bewegungen in dem virtuellen Hintergrund definiert auf mehrere Abbildungen verteilt abgebildet werden können.

Die Steuerschaltung kann bei einigen Ausführungsformen dazu ausgebildet sein, zum Wiedergeben eines Übergangs von einer ersten Darstellung des virtuellen Hintergrunds zu einer zweiten Darstellung des virtuellen Hintergrunds in einem ersten Wiedergabefenster die Bildpunktelemente zum Wiedergeben der ersten Darstellung und in einem darauffolgenden zweiten Wiedergabefenster die Bildpunktelemente zum Wiedergeben der zweiten Darstellung anzusteuern. Grundsätzlich ist es auch möglich, dass die Darstellung des virtuellen Hintergrunds in aufeinanderfolgenden Wiedergabefenster unverändert bleibt, so dass sich die erste Darstellung und die zweite Darstellung in bestimmten Aufnahmesituationen auch entsprechen können. Grundsätzlich kann es jedoch vorgesehen sein, dass die Hintergrund-Wiedergabeeinrichtung zu einer Wiedergabe sich zeitlich verändernder Darstellungen des virtuellen Hintergrunds ausgebildet ist, sodass in verschiedenen Wiedergabefenstern verschiedene Darstellungen des virtuellen Hintergrunds wiedergegeben werden können.

Das erste Wiedergabefenster und das zweite Wiedergabefenster können eine sich entsprechende Wiedergabedauer aufweisen. Insbesondere kann die Wiedergabedauer einem Reziproken der bereits genannten Bildwechselfrequenz entsprechen, sodass insbesondere die Darstellung des virtuellen Hintergrunds auch mit der Bildwechselfrequenz aktualisiert und in jeweiligen Wiedergabefenstern wiedergegeben werden kann.

Ferner kann die Steuerschaltung bei einigen Ausführungsformen mit einem Hintergrundbildspeicher verbunden sein, in welchen die zweite Darstellung während des ersten Wiedergabefensters einschreibbar und/oder in welchem die zweite Darstellung während des ersten Wiedergabefensters gespeichert ist. Grundsätzlich können der Hintergrundbildspeicher und der Referenzbildspeicher von getrennten physischen Einheiten, beispielsweise jeweiligen nichtflüchtigen Speichern und/oder Halbleiterspeichern, gebildet sein, oder der Referenzbildspeicher und der Hintergrundbildspeicher können von einer gemeinsamen physischen Einheit, beispielsweise einem gemeinsamen nichtflüchtigen Speicher und/oder Halbleiterspeicher, gebildet sein, wobei das Referenzbild und die zweite Darstellung beispielsweise an jeweiligen definierten Speicherorten einer solchen gemeinsamen Einheit gespeichert und/oder speicherbar sein können.

Indem die zweite Darstellung während des ersten Wiedergabefensters bereits in einen solchen Hintergrundbildspeicher eingeschrieben werden kann, kann auch die zweite Darstellung unmittelbar zu Beginn des zweiten Wiedergabefensters bereitgestellt sein und muss nicht erst zu einem Zeitpunkt, zu welchem die Wiedergabe erfolgen soll, an die Steuerschaltung übertragen werden. Vielmehr kann durch ein solches vorheriges Speichern der zweiten Darstellung in dem Hintergrundbildspeicher, welcher ebenfalls als ein Schattenregister bezeichnet werden kann, die Steuerung der Hintergrund-Wiedergabeeinrichtung beschleunigt und die zweite Darstellung unmittelbar mit Beginn des zweiten Wiedergabefenster wiedergegeben werden. Dementsprechend können auch weitere, nach dem zweiten Wiedergabefenster wiederzugebende Darstellungen während eines jeweiligen der Wiedergabe vorhergehenden Wiedergabefensters in den Hintergrundbildspeicher eingeschrieben werden, sodass die in dem Hintergrundbildspeicher gespeicherte jeweilige Darstellung insbesondere aktualisierbar und/oder veränderbar sein kann.

Die Steuerschaltung kann bei einigen Ausführungsformen dazu ausgebildet sein, die Bildpunktelemente während des ersten Wiedergabefensters sowohl zum Wiedergeben der ersten Darstellung des virtuellen Hintergrunds als auch zum Wiedergeben des Referenzbildes anzusteuern.

Es kann somit vorgesehen sein, dass die Steuerschaltung dazu ausgebildet ist, das Referenzbild in einem originär der Wiedergabe der ersten Darstellung zugeordneten Wiedergabefenster wiederzugeben, dass also kein eigenes Wiedergabefenster mit einer Wiedergabedauer, welche dem Reziproken einer Bildwechselfrequenz der Hintergrund-Wiedergabeeinrichtung entspricht, für die Wiedergabe des Referenzbildes zur Verfügung steht. Vielmehr kann das Referenzbild lediglich kurzzeitig in einem der ersten Darstellung zugeordneten ersten Wiedergabefenster eingeblendet werden, um beispielsweise einen Alpha-(α-) Kanal in einer von der zugeordneten Kamera erzeugten Abbildung der Darstellung des virtuellen Hintergrunds bzw. des Bildaufnahmestudios generieren zu können.

Die Steuerschaltung kann ferner bei einigen Ausführungsformen dazu ausgebildet sein, die Bildpunktelemente während des ersten Wiedergabefensters zunächst zum Wiedergeben der ersten Darstellung und daraufhin zum Wiedergeben des Referenzbildes anzusteuern, oder umgekehrt. Insofern kann das Referenzbild beispielsweise nicht in der Mitte des Wiedergabefensters wiedergegeben werden, während die erste Darstellung vor der Wiedergabe des Referenzbildes und nach der Wiedergabe der ersten Darstellung wiedergegeben wird. Vielmehr kann die Wiedergabe des Referenzbildes zeitlich klar von der Wiedergabe der ersten Darstellung getrennt sein und beispielsweise zum Ende des Wiedergabefensters erfolgen, wenn das Abbilden der Darstellung des virtuellen Hintergrunds mittels der zugeordneten Kamera beispielsweise bereits abgeschlossen ist.

Die Steuerschaltung kann bei einigen Ausführungsformen dazu ausgebildet sein, die Bildpunktelemente während des ersten Wiedergabefensters für eine Darstellungsdauer zum Wiedergeben der ersten Darstellung und für eine Bildwiedergabedauer zum Wiedergeben des Referenzbildes anzusteuern, wobei die Darstellungsdauer größer als die Bildwiedergabedauer sein oder der Bildwiedergabedauer entsprechen kann. Beispielsweise kann die Darstellungsdauer größer als das Zweifache, größer als das Dreifache, größer als das Vierfache, größer als das Fünffache, größer als das Sechsfache, größer als das Siebenfache, größer als das Achtfache und/oder größer als das Neunfache der Bildwiedergabedauer sein.

Das Referenzbild kann somit bei einigen Ausführungsformen lediglich für eine kurze, insbesondere relativ zu dem Wiedergabefenster kurze, Bildwiedergabedauer innerhalb des Wiedergabefensters eingeblendet und/oder wiedergegeben werden, wobei während des Wiedergabefensters hauptsächlich die Darstellung des virtuellen Hintergrunds für eine Aufnahme mittels der zugeordneten Kamera wiedergegeben werden kann. Beispielsweise kann es vorgesehen sein, dass 80 % des Wiedergabefensters für die Wiedergabe der Darstellung des virtuellen Hintergrunds und 20 % für die Wiedergabe des Referenzbildes und/oder für die Wiedergabe mehrerer Referenzbilder genutzt werden. Auch ein Verhältnis von 90 % zu 10 % kann beispielsweise vorgesehen sein.

Kurze Bildwiedergabedauern können ferner insbesondere vorgesehen sein, wenn die zugeordnete Kamera einen rollierenden Objektivverschluss bzw. einen Rolling-Shutter aufweist, bei welchem das eigentliche Belichtungsfenster über die Belichtungszeit eines jeweiligen Bereichs und/oder einer jeweiligen Zeile eines Bildsensors hinausgeht, so dass bei einer solchen Kamera während eines Großteils des Wiedergabefensters Licht detektiert werden kann. Es kann jedoch vorgesehen sein, das Referenzbild, beispielsweise mit einem geometrischen Muster, außerhalb des Belichtungsfensters der Kamera wiederzugeben, so dass das Referenzbild die von der zugeordneten Kamera erzeugte Abbildung nicht stört, sondern beispielsweise von einer Hilfskamera abgebildet werden kann. Kurze Bildwiedergabedauern können daher ein solches Wiedergeben des Referenzbildes außerhalb eines Belichtungsfensters auch bei Kameras mit rollierenden Objektivverschlüssen ermöglichen.

Die Hintergrund-Wiedergabeeinrichtung kann bei einigen Ausführungsformen eine Schnittstelle zum Empfangen einer Information über ein Belichtungsfenster der zugeordneten Kamera aufweisen, wobei die Steuerschaltung dazu ausgebildet sein kann, die Bildpunktelemente außerhalb des Belichtungsfensters der zugeordneten Kamera zum Wiedergeben des Referenzbildes anzusteuern.

Insbesondere kann die Steuerschaltung dazu ausgebildet sein, ein Referenzbild, welches ein geometrisches Muster zum Bestimmen einer Position der zugeordneten Kamera aufweist, außerhalb der Belichtungszeit der für die Aufnahme vorgesehenen zugeordneten Kamera wiederzugeben. Wie bereits erläutert, kann das Referenzbild auch bei einer Wiedergabe außerhalb des Belichtungsfensters der zugeordneten Kamera beispielsweise mittels einer mit der zugeordneten Kamera verbundenen Hilfskamera abgebildet werden, um eine Ermittlung der Position der zugeordneten Kamera zu ermöglichen. Diese Positionsermittlung kann somit unter Nutzung des Referenzbildes erfolgen, ohne dass das Referenzbild von der zugeordneten Kamera abgebildet wird und die Abbildung der Darstellung des virtuellen Hintergrunds beispielsweise stören könnte. Es kann jedoch grundsätzlich auch vorgesehen sein, derartige Trackingbilder - Referenzbilder mit geometrischen Mustern - mittels der zugeordneten Kamera abzubilden und somit das Referenzbild innerhalb eines Belichtungsfensters der Kamera an der Hintergrund-Wiedergabeeinrichtung wiederzugeben, wobei klar definierte geometrische Muster insbesondere ein einfaches nachträgliches Entfernen während einer Post-Production aus den von der Kamera erzeugten Abbildungen ermöglichen können. Die Schnittstelle der Hintergrund-Wiedergabeeinrichtung kann hierfür als ein Synchronisiereingang dienen.

Insbesondere kann die Steuerschaltung bei einigen Ausführungsformen auch dazu ausgebildet sein, über die Schnittstelle der Hintergrund-Wiedergabeeinrichtung als Information über das Belichtungsfenster einen Steuerbefehl (insbesondere ein Trigger-Signal) von der zugeordneten Kamera zu erhalten und in Ansprechen auf den Steuerbefehl bzw. das Trigger-Signal die Bildpunktelemente zum Wiedergeben des Referenzbildes anzusteuern. Insbesondere kann die Kamera einen solchen Steuerbefehl bzw. ein solches Trigger-Signal übermitteln, wenn eine Belichtungspause - also eine Zeit zwischen zwei aufeinanderfolgenden Belichtungen - der Kamera beginnt, so dass das Referenzbild in Ansprechen auf den Steuerbefehl außerhalb des Belichtungsfensters der zugeordneten Kamera wiedergeben kann. Indem die Ansteuerung der Hintergrund-Wiedergabeeinrichtung hinsichtlich der Wiedergabe des Referenzbildes somit gewissermaßen durch die zugeordnete Kamera veranlasst werden kann, kann insbesondere auf einfache Weise erreicht werden, dass das Referenzbild außerhalb des Belichtungsfensters der Kamera und/oder während einer Belichtungspause wiedergegeben wird, um etwa eine Aufnahme des Referenzbildes mittels einer Hilfskamera zu ermöglichen, die von der zum Aufnehmen der Darstellung des virtuellen Hintergrunds erstellte Abbildung jedoch nicht durch die Wiedergabe des Referenzbildes zu beeinträchtigen.

Typischerweise erfolgen bei einer Kamera abwechselnd ein Belichtungsfenster und eine Belichtungspause, so dass eine Information über ein Belichtungsfenster (Zeitpunkt und/oder Dauer) indirekt auch eine Information über eine Belichtungspause (Zeitpunkt und/oder Dauer) enthält, und umgekehrt.

Insofern betrifft die Erfindung auch ein Aufnahmesystem mit einer Hintergrund-Wiedergabeeinrichtung der hierin offenbarten Art und mit einer zugeordneten Kamera, wobei die Steuerschaltung dazu ausgebildet ist, über eine Schnittstelle der Hintergrund-Wiedergabeeinrichtung einen Steuerbefehl zum Wiedergeben des Referenzbildes zu empfangen und die Bildpunktelemente in Ansprechen auf den Steuerbefehl zum Wiedergeben des Referenzbildes anzusteuern. Bei dem Steuerbefehl kann es sich insbesondere um ein Trigger-Signal handeln, welches von der Steuerschaltung entsprechend umgesetzt wird.

Zur Übermittlung des Steuerbefehls kann die Kamera bei einigen Ausführungsformen des Aufnahmesystems ebenfalls eine Schnittstelle umfassen, welche dazu ausgebildet ist, mit der Schnittstelle der Hintergrund-Wiedergabeeinrichtung zu kommunizieren. Zwischen der Schnittstelle der Kamera und der Schnittstelle der Hintergrund-Wiedergabeeinrichtung kann eine drahtlose und/oder eine drahtgebundene Kommunikation vorgesehen sein.

Die Kamera kann bei einigen Ausführungsformen dazu ausgebildet sein, den Steuerbefehl in Abhängigkeit von einer Belichtungspause der Kamera, insbesondere während oder zu Beginn einer Belichtungspause, an die Schnittstelle der Hintergrund-Wiedergabeeinrichtung zu übermitteln. Insbesondere kann dadurch erreicht werden, dass das Referenzbild, in Ansprechen auf den Steuerbefehl, ebenfalls in der Belichtungspause wiedergegeben wird. Alternativ dazu kann die Steuerschaltung bei einigen Ausführungsformen dazu ausgebildet sein, die Bildpunktelemente in Ansprechen auf den Steuerbefehl mit einer vorgegebenen Verzögerungszeit zum Wiedergeben des Referenzbildes anzusteuern. Dadurch kann beispielsweise erreicht werden, dass das Referenzbild in Ansprechen auf einen zum Ende einer Belichtung von der Kamera ausgesandten Steuerbefehl zuverlässig in einer Belichtungspause wiedergegeben werden kann.

Die Steuerschaltung kann ferner bei einigen Ausführungsformen mit einem weiteren Referenzbildspeicher verbunden sein, in welchem ein weiteres Referenzbild gespeichert ist, wobei die Steuerschaltung dazu ausgebildet sein kann, die Bildpunktelemente während des ersten Wiedergabefensters zum Wiedergeben der ersten Darstellung des virtuellen Hintergrunds, zum Wiedergeben des Referenzbildes und zum Wiedergeben des weiteren Referenzbildes anzusteuern. Beispielsweise kann es vorgesehen sein, während des ersten Wiedergabefensters zusätzlich zu dem Wiedergeben der Darstellung des virtuellen Hintergrunds ein erstes Referenzbild einzublenden, welches das Generieren eines Alpha-(α-) Kanals in der von der zugeordneten Kamera erzeugten Abbildung der Darstellung des virtuellen Hintergrunds ermöglicht, und ein zweites Referenzbild einzublenden, welches ein Muster oder mehrere Muster aufweist, um eine Ermittlung der Position der zugeordneten Kamera in dem Bildaufnahmestudio zu ermöglichen.

Ferner kann es vorgesehen sein, dass die Steuerschaltung dazu ausgebildet ist, die Bildpunktelemente während des ersten Wiedergabefensters für eine Darstellungsdauer zum Wiedergeben der ersten Darstellung und für eine weitere Bildwiedergabedauer zum Wiedergeben des weiteren Referenzbildes anzusteuern, wobei die Darstellungsdauer größer als die weitere Bildwiedergabedauer sein kann. Auch das weitere Referenzbild kann somit insbesondere lediglich kurzzeitig in dem ersten Wiedergabefenster eingeblendet werden, wobei der Großteil des ersten Wiedergabefensters dazu genutzt werden kann, die Darstellung des virtuellen Hintergrunds wiederzugeben. Die Steuerschaltung kann ferner dazu ausgebildet sein, die Bildpunktelemente während des ersten Wiedergabefensters für eine identische Dauer zum Wiedergeben des Referenzbildes und zum Wiedergeben des weiteren Referenzbildes anzusteuern. Insbesondere kann somit die weitere Bildwiedergabedauer der bereits genannten Bildwiedergabedauer entsprechen. Beispielsweise kann es vorgesehen sein, dass die Darstellungsdauer 80 % des Wiedergabefensters entspricht, während die Bildwiedergabedauer und die weitere Bildwiedergabedauer je 10 % des Wiedergabefensters entsprechen können.

Die Steuerschaltung kann bei einigen Ausführungsformen zudem dazu ausgebildet sein, die Bildpunktelemente während des zweiten Wiedergabefensters sowohl zum Wiedergeben der zweiten Darstellung des virtuellen Hintergrunds als auch zum Wiedergeben des Referenzbildes anzusteuern. Gegebenenfalls kann auch während des zweiten Wiedergabefensters ein weiteres Referenzbild wiedergegeben werden. Das Referenzbild und/oder die Referenzbilder können insofern in sämtlichen Frames bzw. Wiedergabefenstern eingeblendet werden, in welchen Darstellungen des virtuellen Hintergrunds an der Hintergrund-Wiedergabeeinrichtung wiedergegeben werden, so dass beispielsweise zu jeder von der Kamera erzeugten Abbildung durch Einblenden eines entsprechenden Referenzbildes während des zugeordneten Wiedergabefensters ein Alpha-(a) Kanal generiert werden kann.

Die Hintergrund-Wiedergabeeinrichtung kann bei einigen Ausführungsformen eine Bildinhalt-Steuereinrichtung aufweisen, wobei die Bildinhalt-Steuereinrichtung dazu ausgebildet sein kann, den virtuellen Hintergrund zu generieren, eine Projektion des virtuellen Hintergrunds auf die zweidimensionale Anordnung der Bildpunktelemente zu ermitteln und die ermittelte Projektion an die Steuerschaltung zu übermitteln.

Insbesondere kann die Bildinhalt-Steuereinrichtung dazu ausgebildet sein, jeweilige Hintergrundbilddaten zu ermitteln, welche die Projektion des virtuellen Hintergrunds auf die zweidimensionale Anordnung der Bildpunktelemente repräsentieren. Ferner kann die Bildinhalt-Steuereinrichtung insbesondere dazu ausgebildet sein, den virtuellen Hintergrund als einen dreidimensionalen virtuellen Hintergrund zu generieren, sodass eine Projektion dieses dreidimensionalen virtuellen Hintergrunds auf die zweidimensionale Anordnung der Bildpunktelemente erforderlich sein kann, um die Darstellung des virtuellen Hintergrunds an der Hintergrund-Wiedergabeeinrichtung mittels der Bildpunktelemente wiedergeben zu können. Zum Generieren des virtuellen Hintergrunds kann die Bildinhalt-Steuereinrichtung beispielsweise mit einem Speicher verbunden sein, in welchem ein Modell des virtuellen Hintergrunds gespeichert ist.

Indem eine Bildinhalt-Steuereinrichtung vorgesehen sein kann, die dazu ausgebildet ist, den virtuellen Hintergrund zu generieren und eine Projektion des virtuellen Hintergrunds zu ermitteln, um diese Projektion an die Steuerschaltung zu übermitteln, kann insbesondere nicht die Steuerschaltung selbst dazu ausgebildet, diese Funktionen zu erfüllen. Beispielsweise kann das Generieren des virtuellen Hintergrunds von einem 3D-Rechner ausgeführt werden, welcher den virtuellen Hintergrund an eine zentrale Steuerung der Hintergrund-Wiedergabeeinrichtung übermitteln kann. Diese zentrale Steuereinrichtung kann daraufhin beispielsweise die Projektion des virtuellen Hintergrunds auf die zweidimensionale Anordnung der Bildpunktelement ermitteln, um die entsprechenden Hintergrundbilddaten an jeweilige Paneel-Steuerungen weiterzuleiten. Diese Paneel-Steuerungen, die einem jeweiligen Paneel der Hintergrund-Wiedergabeeinrichtung zugeordnet sein können, können insbesondere die Steuerschaltung bilden, oder die Steuerschaltung kann von jeweiligen von den Paneel-Steuerungen angesteuerten Bildpunktelement-Steuereinrichtungen gebildet sein. Insofern kann die Darstellung des virtuellen Hintergrunds zwar an die Steuerschaltung übermittelbar sein, wobei die Steuerschaltung bei Ausführungsformen mit einer solchen Bildinhalt-Steuereinrichtung jedoch nicht dazu ausgebildet ist, die Darstellung des virtuellen Hintergrunds und/oder den virtuellen Hintergrund zu generieren. Umgekehrt ist der Referenzbildspeicher somit nicht der Bildinhalt-Steuereinrichtung zugeordnet, sodass das Referenzbild, im Unterschied zu der Projektion des virtuellen Hintergrunds auf die zweidimensionale Anordnung der Bildpunktelemente, nicht erst an die Steuerschaltung übermittelt werden muss.

Die Bildinhalt-Steuereinrichtung kann bei einigen Ausführungsformen dazu ausgebildet sein, sich verändernde Darstellungen des virtuellen Hintergrunds in einen mit der Steuerschaltung verbundenen Hintergrundbildspeicher einzuschreiben. Insbesondere kann es sich bei diesem Hintergrundbildspeicher um den vorstehend bereits genannten Hintergrundbildspeicher handeln. Durch ein solches Einschreiben sich verändernder Darstellungen kann insbesondere erreicht werden, dass eine jeweilige in einem folgenden Wiedergabefenster wiederzugebende Darstellung des virtuellen Hintergrunds bereits während eines vorhergehenden Wiedergabefensters in den Hintergrundbildspeicher eingeschrieben werden kann, um für die Wiedergabe in dem folgenden Wiedergabefenster unmittelbar zur Verfügung steht. Eine etwaige Verzögerung aufgrund einer noch erforderlichen Datenübermittlung der wiederzugebenden Darstellung von der Bildinhalt-Steuereinrichtung an die Steuerschaltung kann dadurch vermieden werden.

Bei einigen Ausführungsformen kann die Steuerschaltung einen Dateneingang aufweisen, über den das Referenzbild unter Umgehung der Bildinhalt-Steuereinrichtung an die Steuerschaltung übertragen werden kann. Somit muss das Referenzbild nicht über einen gesamten Datenpfad von der Bildinhalt-Steuereinrichtung an die Steuerschaltung übertragen werden, um eine Wiedergabe an der Hintergrund-Wiedergabeeinrichtung zu ermöglichen. Ferner kann das Referenzbild somit bereits vor der Aufnahme mittels der zugeordneten Kamera generiert und über den Dateneingang an die Steuerschaltung übermittelt und dort vorgehalten werden. Bei dieser Vorgehensweise muss also während der Aufnahme keine Übertragung des Referenzbilds an die Steuerschaltung mehr erfolgen, wodurch die Steuerschaltung zusätzlich zeitlich entlastet wird.

Die Steuerschaltung kann bei einigen Ausführungsformen dazu ausgebildet sein, die Bildpunktelemente direkt anzusteuern. Alternativ dazu kann die Steuerschaltung mit mehreren Bildpunktelement-Steuereinrichtungen verbunden sein, wobei jede der mehreren Bildpunktelement-Steuereinrichtungen dazu ausgebildet sein kann, eine jeweilige Gruppe von Bildpunktelementen anzusteuern. Die Steuerschaltung kann bei solchen Ausführungsformen ferner dazu ausgebildet sein, die Bildpunktelemente mittels der mehreren Bildpunktelement-Steuereinrichtungen anzusteuern. Wie bereits erläutert, kann die Steuerschaltung dementsprechend insbesondere eine Paneel-Steuerung und/oder einen Panel-Controller bilden, der die Bildpunktelemente mittels der Bildpunktelement-Steuereinrichtung ansteuert. Die Bildpunktelement-Steuereinrichtungen können beispielsweise als Treiber und/oder Treiber-Chips ausgebildet sein. Alternativ dazu kann die Steuerschaltung bei einigen Ausführungsformen auch selbst als ein Treiber-Chip und/oder Treiber ausgebildet sein, um die Bildpunktelemente direkt anzusteuern.

Bei einigen Ausführungsformen kann die Hintergrund-Wiedergabeeinrichtung mehrere Paneele umfassen, wobei jedes der mehreren Paneele rechteckig, insbesondere quadratisch, und randlos ausgebildet sein kann. Ferner können die mehreren Paneele in einer zumindest zweidimensionalen Matrix angeordnet sein.

Die Hintergrund-Wiedergabeeinrichtung kann somit insbesondere aus mehreren Paneelen zusammengesetzt sein, wobei an jedem der mehreren Paneele ein jeweiliger Abschnitt der Darstellung des virtuellen Hintergrunds und/oder des Referenzbildes wiedergegeben werden kann. Ferner kann jedem der mehreren Paneele zumindest eine Steuerschaltung zugeordnet sein. Insbesondere, wenn die Steuerschaltung als eine Paneel-Steuerung bzw. ein Panel-Controller ausgebildet ist, kann jedem der mehreren Paneele genau eine eigene Steuerschaltung zugeordnet sein. Bei der Ausbildung der Steuerschaltung als Bildpunktelement-Treiber und/oder Bildpunktelement-Treiber-Chip kann es jedoch vorgesehen sein, dass jedem der mehreren Paneele mehrere Steuerschaltungen zugeordnet sind, um mehrere Gruppen von Bildpunktelementen des jeweiligen Paneels ansteuern zu können.

Ferner bezieht sich die Erfindung auf eine Hintergrund-Wiedergabeeinrichtung für ein virtuelles Bildaufnahmestudio, welche dazu ausgebildet ist, für eine Aufnahme mittels einer zugeordneten Kamera hinter einem realen Motiv eine Darstellung eines virtuellen Hintergrunds wiederzugeben. Die Hintergrund-Wiedergabeeinrichtung weist zumindest ein Paneel mit einer Vielzahl aktiv leuchtender Bildpunktelemente in einer zweidimensionalen Anordnung, eine Bildinhalt-Steuereinrichtung und eine Steuerschaltung auf. Die Bildinhalt-Steuereinrichtung ist dazu ausgebildet, den virtuellen Hintergrund zu generieren, eine Projektion des virtuellen Hintergrunds auf die zweidimensionale Anordnung der Bildpunktelemente zu ermitteln und die ermittelte Projektion an die Steuerschaltung zu übermitteln. Die Steuerschaltung ist dazu ausgebildet, die Bildpunktelemente alternierend zum Wiedergeben zumindest eines Teils der Darstellung des virtuellen Hintergrunds und zum Wiedergeben eines Referenzbildes anzusteuern, welches nicht den virtuellen Hintergrund repräsentiert. Ferner weist die Steuerschaltung einen Dateneingang auf, über den das Referenzbild unter Umgehung der Bildinhalt-Steuereinrichtung an die Steuerschaltung übertragbar ist.

Wiederum kann dadurch, dass die Steuerschaltung einen Dateneingang aufweist, über welchen das Referenzbild unter Umgehung der Bildinhalt-Steuereinrichtung an die Steuerschaltung übertragbar ist, erreicht werden, dass das Referenzbild nicht über einen gesamten Datenpfad von der Bildinhalt-Steuereinrichtung erst an die Steuerschaltung übertragen werden muss, um eine Wiedergabe an der Hintergrund-Wiedergabeeinrichtung zu ermöglichen. Eine entsprechende Rechenkapazität der Bildinhalt-Steuereinrichtung und/oder eine erforderliche Übertragungskapazität zur Übermittlung des Referenzbildes kann entsprechend eingespart werden.

Bei einigen Ausführungsformen kann die Steuerschaltung einen Referenzbildspeicher aufweisen, in dem das Referenzbild speicherbar ist. Insbesondere kann der Referenzbildspeicher direkt, oder über die Steuerschaltung, mit dem Dateneingang der Steuerschaltung verbunden sein, so dass das Referenzbild über den Dateneingang in den Referenzbildspeicher eingeschrieben werden kann. Der Referenzbildspeicher ermöglicht es somit, das Referenzbild für die Steuerschaltung vorzuhalten, sodass die Steuerschaltung die Bildpunktelemente zu einem vorgegebenen Zeitpunkt zum Wiedergeben des Referenzbildes ansteuern kann, ohne dass das Referenzbild erst übertragen werden muss.

Die Hintergrund-Wiedergabeeinrichtung kann bei einigen Ausführungsformen eine Schnittstelle zum Empfangen einer Information über ein Belichtungsfenster der zugeordneten Kamera aufweisen, wobei die Steuerschaltung dazu ausgebildet sein kann, die Bildpunktelemente außerhalb des Belichtungsfensters der zugeordneten Kamera zum Wiedergeben des Referenzbildes anzusteuern. Wie bereits erläutert, kann die Information insbesondere auch einen Steuerbefehl (insbesondere ein Trigger-Signal) der zugeordneten Kamera umfassen, wobei die Steuerschaltung dazu ausgebildet sein kann, die Bildpunktelemente in Ansprechen auf den Steuerbefehl und/oder das Trigger-Signal zum Wiedergeben des Referenzbildes anzusteuern. Beispielsweise kann die Kamera dazu ausgebildet sein, einen solchen Steuerbefehl oder ein solches Trigger-Signal an die Schnittstelle zu übermitteln, wenn eine Belichtungspause der Kamera beginnt, so dass das in Ansprechen auf den Steuerbefehl oder das Trigger-Signal wiedergegebene Referenzbild außerhalb des Belichtungsfensters der zugeordneten Kamera wiedergegeben werden kann.

Ferner können die erläuterten Merkmale der Hintergrund-Wiedergabeeinrichtung, der Bildinhalt-Steuereinrichtung und der Steuerschaltung auch bei diesem weiteren Erfindungsaspekt einzeln oder in Kombination verwirklicht sein, um die jeweiligen erläuterten Vorteile zu erzielen.

Die Erfindung wird im Folgenden rein beispielhaft anhand von Ausführungsbeispielen in Bezug auf die Zeichnungen erläutert.

### Es zeigen:

- Fig. 1: eine schematische Darstellung eines Aufnahmesystems für ein Bildaufnahmestudio mit einer Hintergrund-Wiedergabeeinrichtung zur Wiedergabe einer Darstellung eines virtuellen Hintergrunds und mit einer Kamera,
- Fig. 2A und 2B: eine schematische Darstellung einer für eine Aufnahme in dem Bildaufnahmestudio vorgesehenen Kamera sowie eines Kamerasystems mit der Kamera und einer mit der Kamera verbundenen Hilfskamera,
- Fig. 3: eine schematische Darstellung einer Steuereinrichtung der HintergrundWiedergabeeinrichtung,
- Fig. 4A und 4B: eine schematische Darstellung zur Veranschaulichung eines alternierenden Wiedergebens der Darstellung des virtuellen Hintergrunds und eines Referenzbildes sowie eine schematische Darstellung zur Illustration eines zeitlichen Ablaufs der Wiedergabe, und
- Fig. 5A und 5B: eine schematische Darstellung zur Veranschaulichung eines alternierenden Wiedergebens der Darstellung des virtuellen Hintergrunds, eines ersten Referenzbildes und eines zweiten Referenzbildes sowie eine schematische Darstellung zur Illustration eines zeitlichen Ablaufs der Wiedergabe.

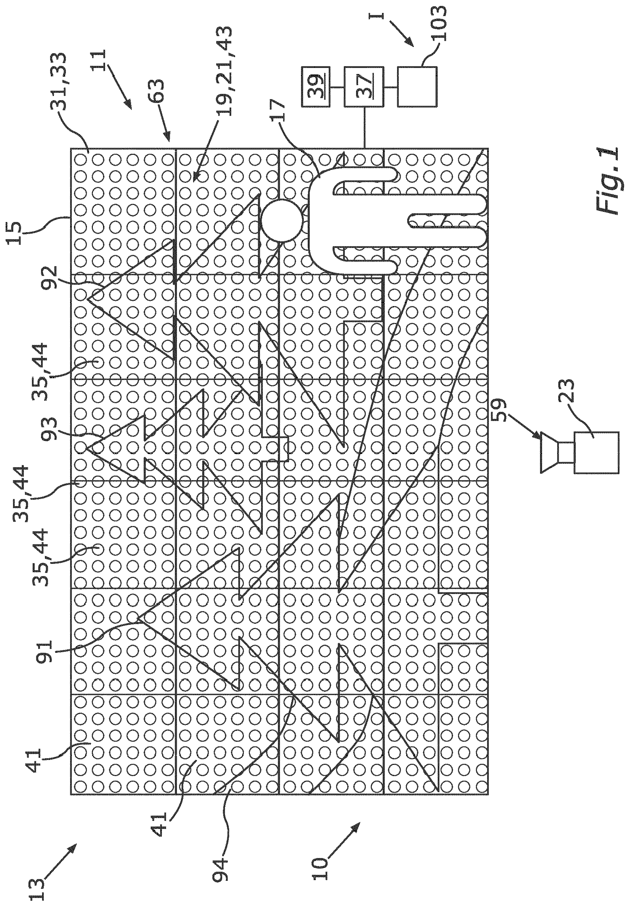

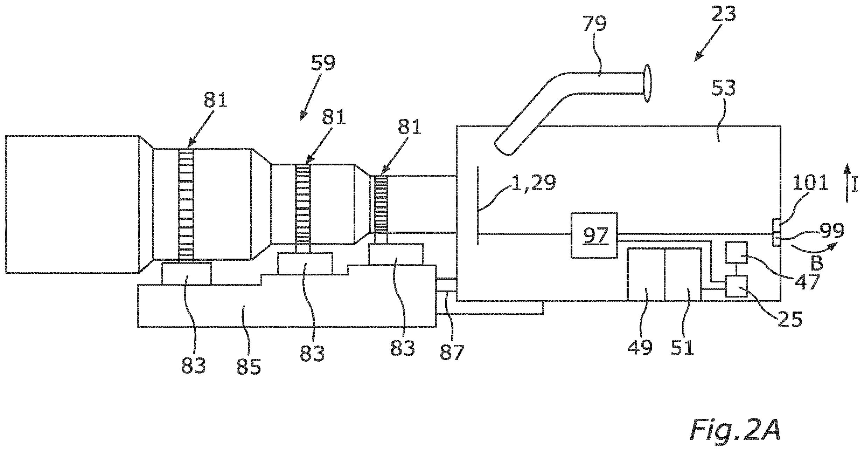

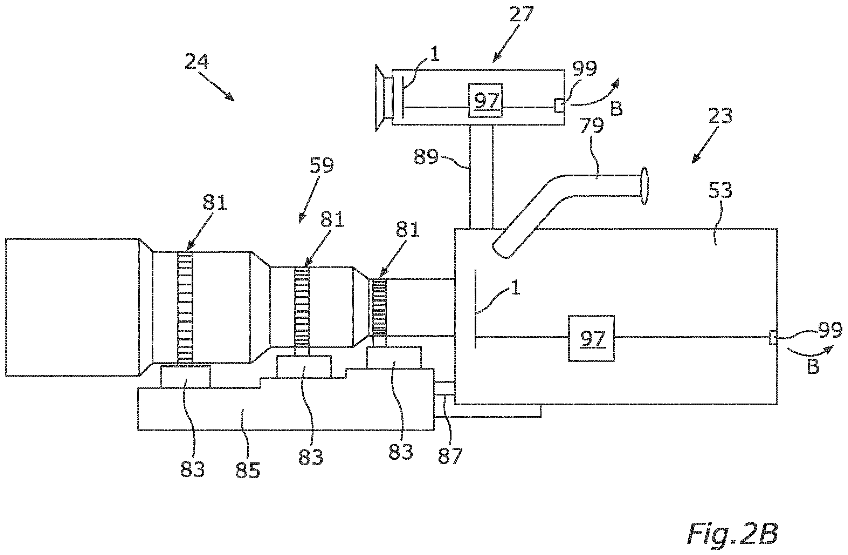

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 1 mit mehreren lichtempfindlichen Sensorelementen angeordnet sein, auf welche durch eine Blendenöffnung einer Blende eindringendes Licht mittels eines Linsensystems bzw. zumindest einer Linse zum Erzeugen einer Abbildung geleitet werden kann (vgl. Fig. 2).

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 ein Aufnahmesystem 10 bildet. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Bildpunktelementen 35 auf, die in einer zweidimensionalen Anordnung nebeneinander angeordnet sind. Beispielsweise können die Bildpunktelemente 35 als individuell ansteuerbare Leuchtdioden 44 oder als individuell ansteuerbare Leuchtdiodeneinheiten ausgebildet sein, wobei jede einer solchen Leuchtdiodeneinheit mehrere, insbesondere drei, Leuchtdioden 44 umfassen kann. Insbesondere kann es vorgesehen sein, dass die Bildpunktelemente 35 als Leuchtdiodeneinheiten mit drei jeweiligen Leuchtdioden 44 ausgebildet sind, wobei eine der drei Leuchtdioden 44 rotes Licht, eine Leuchtdiode 44 grünes Licht und ein Leuchtdiode 44 blaues Licht emittieren kann. Die Leuchtdiodeneinheit kann zudem einen Farbmischer umfassen, um durch jeweiliges individuelles Ansteuern der Leuchtdioden 44 einer Leuchtdiodeneinheit eine jeweilige von dem Bildpunktelement 35 emittierte Farbe und/oder Helligkeit einstellen zu können. Die Leuchtdioden 44 können beispielsweise als LED oder als organische Leuchtdioden 44 bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Ferner umfasst die Hintergrund-Wiedergabeeinrichtung 15 eine Vielzahl von Paneelen 41, welche auch als Panels bezeichnet werden können. An jedem Paneel 41 der Vielzahl von Paneelen 41 ist eine jeweilige Vielzahl der aktiv leuchtenden Bildpunktelemente 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden. Insofern umfasst die aktive Beleuchtungseinrichtung 31 bei der gezeigten Ausführungsform mehrere Paneele 41.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Bildpunktelement 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Bildpunktelemente 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds nachzubilden.

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Zudem ist es möglich, durch eine sich zeitlich verändernde Ansteuerung der Bildpunktelemente 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine weitere Studiobeleuchtung des Bildaufnahmestudios 13 unterstützen. Ferner kann durch ein Beleuchten des realen Motivs 17 mittels der Hintergrund-Wiedergabeeinrichtung 15 die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert.

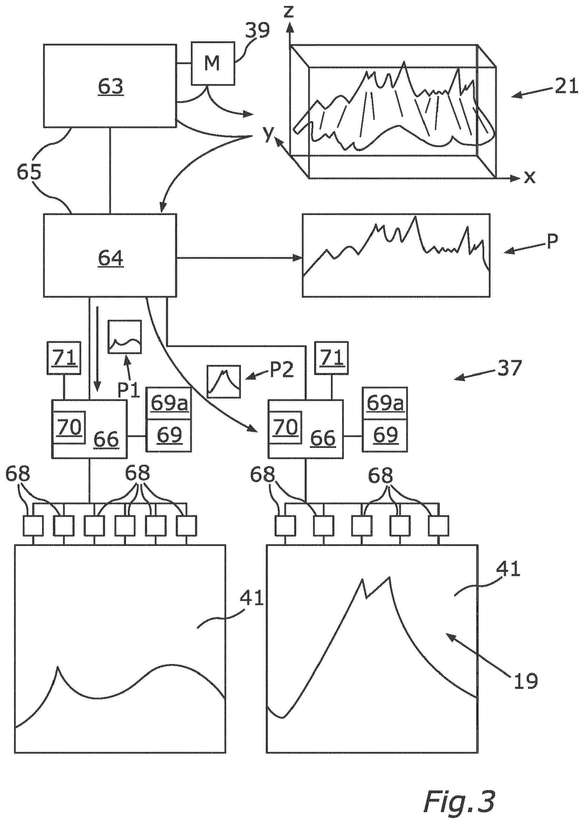

Um die Darstellung 19 des virtuellen Hintergrunds 21 erzeugen und die Bildpunktelemente 35 zur Wiedergabe der Darstellung ansteuern zu können, weist die Hintergrund-Wiedergabeeinrichtung 15 eine Steuereinrichtung 37 auf, welche mit einem Speicher 39 verbunden ist. In dem Speicher 39 kann insbesondere ein Modell M des virtuellen Hintergrunds 21 gespeichert sein, so dass die Steuereinrichtung den virtuellen Hintergrund 21 anhand des Modells generieren kann. Ferner kann die Steuereinrichtung 37 dazu ausgebildet sein, den virtuellen Hintergrund 21 auf die Hintergrund-Wiedergabeeinrichtung 15 und insbesondere die zweidimensionale Anordnung der Bildpunktelemente 35 zu projizieren (vgl. auch Fig. 3).

Eine mögliche Ausführung der zugeordneten Kamera ist in Fig. 2 schematisch gezeigt. Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein. Die Kamera 23 kann insbesondere als Laufbildkamera oder Bewegtbildkamera ausgebildet sein, um aufeinanderfolgend eine Sequenz von Abbildungen 73 erzeugen zu können, die beispielsweise als ein Film abgespielt werden kann.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

An dem Kamerakörper 53 ist eine ferner Wiedergabeeinrichtung 49 angeordnet, über welche einem Benutzer Informationen zu Einstellungen der Kamera 23 angezeigt werden können. Bei der Wiedergabeeinrichtung 49 kann es sich insbesondere um ein Display handeln. Zudem weist die Kamera 23 eine an dem Kamerakörper 53 angeordnete Eingabeeinrichtung 51 auf, über welche der Benutzer Einstellungen der Kamera 23 vornehmen kann. Insbesondere kann an der Eingabeeinrichtung 51 eine Belichtungszeit der Kamera 23 einstellbar sein, wobei eine mit der Eingabeeinrichtung 51 verbundene Steuereinrichtung 25 dazu ausgebildet sein kann, die Kamera 23 gemäß der eingegebenen Belichtungszeit zu steuern. Insbesondere können die Wiedergabeeinrichtung 49 und die Eingabeeinrichtung 51 von einem Touchscreen gebildet sein, über welchen dem Benutzer sowohl Informationen angezeigt als auch Benutzereingaben empfangen werden können.

Um durch das Objektiv 59 eintreffendes Licht abbilden zu erzeugen, weist die Kamera 23 ferner einen innerhalb des Kamerakörpers 53 angeordneten Bildsensor 1 auf. Dieser Bildsensor 1 kann beispielsweise auf der CMOS-Technologie oder der CCD-Technologie basierend ausgebildet sein und eine Vielzahl von lichtempfindlichen Sensorelementen aufweisen, die in mehreren Zeilen und Spalten angeordnet sein können. Ferner weist die Kamera 23 eine Ausleseschaltung 97 auf, welche dazu ausgebildet ist, die Signale der jeweiligen Sensorelemente auszulesen, aufzubereiten, zu digitalisieren und an bzw. über einen Signalausgang 99 auszugeben. Dazu kann die Ausleseschaltung 97 insbesondere Verstärker, Multiplexer, Analog-DigitalWandler, Pufferspeicher und/oder Mikrocontroller umfassen. Letztlich kann somit von der Kamera 23 ein Bilddatensatz B erzeugt werden, welcher der Abbildung bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann. Zudem ist die Steuereinrichtung 25 mit einem Speicher 47 verbunden und kann beispielsweise dazu ausgebildet sein, den Bilddatensatz B wahlweise in den Speicher 47 einzuschreiben oder über den Signalausgang 99 auszugeben.

Ferner weisen die Hintergrund-Wiedergabeeinrichtung 15 eine Schnittstelle 103 und die Kamera 23 eine Schnittstelle 101 auf, über welche insbesondere Informationen I von der Kamera 23 an die Hintergrund-Wiedergabeeinrichtung 15 übermittelbar sein können. Insbesondere kann die Steuereinrichtung 37 der Hintergrund-Wiedergabeeinrichtung 15 dazu ausgebildet sein, die aktive Beleuchtungseinrichtung 31 in Abhängigkeit von einer von der Kamera 23 empfangenen Information I zu steuern, wie nachstehend noch näher erläutert ist.

In Fig. 2B ist zudem ein Kamerasystem 24 veranschaulicht, welches zusätzlich zu der zugeordneten Kamera 23, mit welcher die Darstellung 19 des virtuellen Hintergrunds 21 während einer Aufnahme abgebildet wird, eine Hilfskamera 27 aufweist, die über eine Kopplungsstange 89 mit der Hauptkamera 23 verbunden ist bzw. verbunden werden kann. Die Hilfskamera 27 ist dabei in einer definierten Position relativ zu der Kamera 23 angeordnet und derart ausgerichtet, dass jeweilige Gesichtsfelder der Kamera 23 und der Hilfskamera 27 einander im Wesentlichen entsprechen. Auch die Hilfskamera 27 weist einen Bildsensor 1 und eine Ausleseschaltung 97 auf, um einen Bilddatensatz B zu generieren und an einem Signalausgang 99 auszugeben, welcher eine von der Hilfskamera 27 erzeuge Abbildung repräsentiert. Ein solches Kamerasystem 24 kann es insbesondere ermöglichen, eine Position der zugeordneten Kamera 23 in dem Bildaufnahmestudio 13 zu bestimmen, indem mittels der Hilfskamera 27 ein entsprechendes Referenzbild R1 aufgenommen wird. Dies wird nachstehend noch näher erläutert.

Fig. 3 zeigt eine schematische Veranschaulichung der Steuereinrichtung 37 der Hintergrund-Wiedergabeeinrichtung 15. Die Steuereinrichtung 37 umfasst einen 3D-Rechner 63, welcher mit dem Speicher 39 verbunden ist. In dem Speicher 39 kann beispielsweise ein Modell M des virtuellen Hintergrunds 21 gespeichert und der 3D-Rechner kann dazu ausgebildet sein, anhand des Modells M den virtuellen Hintergrund 21 zu generieren. Beispielsweise ist der in Fig. 3 gezeigte virtuelle Hintergrund 21 von einer dreidimensionalen Gebirgslandschaft gebildet, so dass der 3D-Rechner 63 einen in einem dreidimensionalen Koordinatensystem x, y und z definierten virtuellen Hintergrund 21 generieren kann.

Daraufhin ist es bei der anhand von Fig. 3 veranschaulichten Steuereinrichtung 37 vorgesehen, dass der 3D-Rechner 63 den generierten virtuellen Hintergrund 21 an eine zentrale Steuerung 64 der Hintergrund-Wiedergabeeinrichtung 15 übermittelt. Die zentrale Steuerung 64 (z.B. Mikroprozessor oder Central Processing Unit, CPU) kann insbesondere dazu ausgebildet sein, den virtuellen Hintergrund 21 bzw. diesen repräsentierende Daten von dem 3D-Rechner 63 zu empfangen, die Daten auszulesen und zu prozessieren, um anhand des empfangenen virtuellen Hintergrunds 21 eine Projektion P des virtuellen Hintergrunds 21 auf die aktive Beleuchtungseinrichtung 31 und/oder die zweidimensionale Anordnung der Bildpunktelemente 25 zu ermitteln. Insbesondere kann die zentrale Steuerung 64 somit Bilddaten ermitteln, welche die Projektion P des virtuellen Hintergrunds 21 auf die aktive Beleuchtungseinrichtung 31 repräsentieren.

Der 3D-Rechner 63 und die zentrale Steuerung 64 bilden gemeinsam eine Bildinhalt-Steuereinrichtung 65, welche letztlich insbesondere die Funktionen umfasst, den virtuellen Hintergrund 21 zu generieren und den generierten virtuellen Hintergrund 21 auf die aktive Beleuchtungseinrichtung 31 und/oder die Hintergrund-Wiedergabeeinrichtung 15 zu projizieren. Grundsätzlich kann es auch vorgesehen sein, dass beispielsweise die zentrale Steuerung 64 dazu ausgebildet ist, den virtuellen Hintergrund 21 anhand des Modells M zu generieren, so dass die Bildinhalt-Steuereinrichtung 65 auch von einer einzigen Einheit gebildet sein kann und nicht zwangsläufig aus den voneinander getrennten Einheiten des 3D-Rechners 63 und der zentralen Steuerung 64 gebildet sein muss. Umgekehrt kann auch der 3D-Rechner 63 beispielsweise dazu ausgebildet sein, die Projektion P zu ermitteln und insofern die Funktion der zentralen Steuerung 64 zu übernehmen.

Wie bereits erläutert, kann die Hintergrund-Wiedergabeeinrichtung 15 insbesondere eine Vielzahl von Paneelen 41 umfassen, an welchen eine jeweilige Vielzahl von Bildpunktelementen 35, die insbesondere als Leuchtdioden 44 oder Leuchtdiodeneinheiten ausgebildet sein können, in einer zweidimensionalen Anordnung angeordnet ist. Die anhand von Fig. 3 veranschaulichte Steuereinrichtung 37 umfasst für jedes dieser Paneele 41 eine jeweilige Steuerschaltung 66 (z.B. Mikrocontroller, Mikroprozessor oder Central Processing Unit, CPU), welche auch als Panel-Controller bezeichnet werden kann. Die (Paneel-)Steuerschaltungen 66 sind von der Bildinhalt-Steuereinrichtung 65 (und somit von dem 3D-Rechner 63 und der zentralen Steuerung 64) separat ausgebildet, d.h. als getrennte physische Einheiten. Die zentrale Steuerung 64 als Teil der Bildinhalt-Steuereinrichtung 65 der Hintergrund-Wiedergabeeinrichtung 15 ist ferner dazu ausgebildet, jeweilige, an einzelnen Paneelen 41 darzustellende Abschnitte P1 und P2 der Projektion P des virtuellen Hintergrunds 21 zu bestimmen und an die jeweiligen Steuerschaltungen 66 der Paneele 41 zu übermitteln. Die Steuerschaltungen 66 können wiederum mit jeweiligen Bildpunktelement-Steuereinrichtungen 68 verbunden sein, wobei jede der Bildpunktelement-Steuereinrichtungen 68 dazu ausgebildet sein kann, ein jeweiliges Bildpunktelement 35 oder eine Gruppe von Bildpunktelementen 35 des zugeordneten Paneels 41 anzusteuern. Über die Bildpunktelement-Steuereinrichtungen 68 können an die Bildpunktelemente 35 insbesondere jeweilige Bildinformationen, beispielsweise eine Helligkeit und/oder eine Farbe, eines mittels eines jeweiligen Bildpunktelements 35 wiederzugebenden Bildpunktes der Projektion P übermittelt werden, um die Bildpunktelemente 35 eines Paneels 41 zum Wiedergeben des jeweiligen Abschnitts P1 oder P2 der Projektion P ansteuern zu können. Durch die Zusammenfügung der einzelnen Paneele 41 kann dadurch schließlich die gesamte Darstellung 19 des virtuellen Hintergrunds 21 an der Hintergrund-Wiedergabeeinrichtung 15 wiedergegeben werden (vgl. auch Fig. 1).

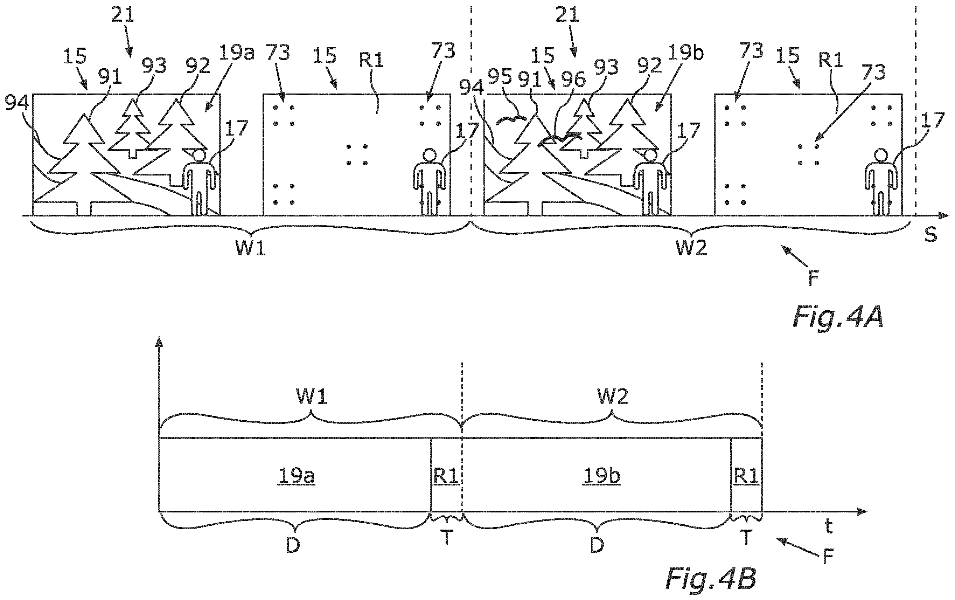

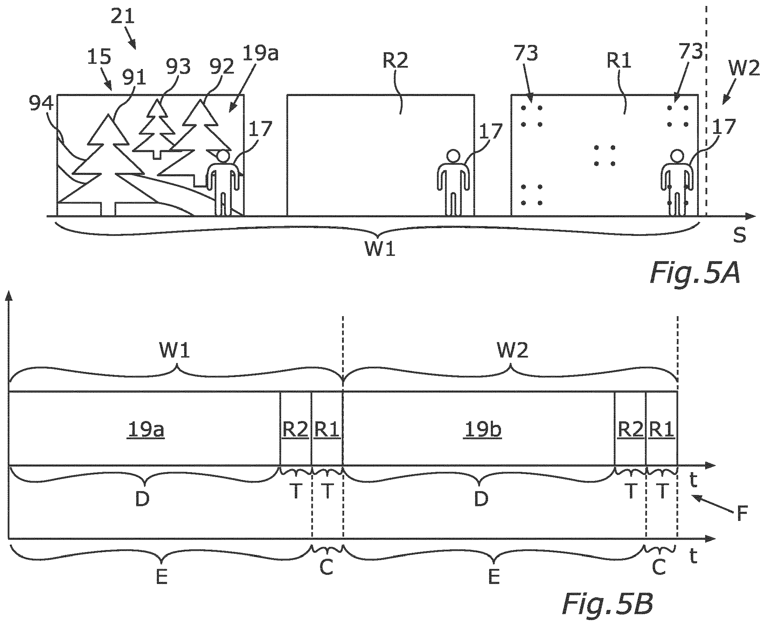

Wie Fig. 3 ferner zeigt, sind die Steuerschaltungen 66, welche in dem gezeigten Ausführungsbeispiel als Paneel-Steuerungen ausgebildet und einem jeweiligen Paneel 41 zugeordnet sind, mit einem jeweiligen Referenzbildspeicher 69 verbunden, in welchem ein Referenzbild R1 oder R2 speicherbar ist (vgl. auch Fig. 4A und 5A). Die den (Paneel-)Steuerschaltungen 66 zugeordneten Referenzbildspeicher 69 sind von dem der Bildinhalt-Steuereinrichtung 65 zugeordneten Speicher 39 separat ausgebildet, d.h. als getrennte physische Einheiten. Die Referenzbilder R1, R2 können an die Steuerschaltungen 66 über einen jeweiligen Dateneingang 70 übermittelt werden. Das Speichern der Referenzbilder R1, R2 in dem jeweiligen Referenzbildspeicher 69 ermöglicht es der Steuerschaltung 66, die Bildpunktelemente 35 - über die Bildpunktelement-Steuereinrichtungen 68 - alternierend zum Wiedergeben des jeweiligen Abschnitts P1 oder P2 der Projektion P des virtuellen Hintergrunds 21 und zum Wiedergeben des Referenzbilds R1 und/oder R2 anzusteuern. Dies ist anhand der Fig. 4A bis 5B veranschaulicht.

Wie Fig. 4A zeigt, können die (Paneel-)Steuerschaltungen 66 dazu ausgebildet sein, zum Wiedergeben eines Übergangs von einer ersten Darstellung 19a des virtuellen Hintergrunds 21 zu einer zweiten Darstellung 19b des virtuellen Hintergrunds 21 in einem ersten Wiedergabefenster W1 die erste Darstellung 19a wiederzugeben, um in einem darauffolgenden Wiedergabefenster W2 die Bildpunktelemente 35 zum Wiedergeben der zweiten Datenstellung 19b anzusteuern. Die Hintergrund-Wiedergabeeinrichtung kann dazu ausgebildet sein, die Darstellung 19 des virtuellen Hintergrunds 21 mit einer vorgegebenen und/oder einstellbaren Bildwechselfrequenz F zu wechseln, um beispielsweise Bewegungen in dem virtuellen Hintergrund 21 darstellen zu können. Insbesondere kann die Bildwechselfrequenz F mit einer Bildaufnahmefrequenz der zugeordneten Kamera 23 gekoppelt sein, so dass jeder von der Kamera 23 erstellten Abbildung der Darstellung 19 des virtuellen Hintergrunds 21 eine jeweilige Darstellung 19a oder 19b zugeordnet werden kann. Beispielhaft sind in der zweiten Darstellung 19b des virtuellen Hintergrunds 21 zwei weitere Objekte 95 und 96, zwei Vögel, hinzugefügt, so dass ein Betrachter der von der Kamera 23 erstellten Abbildungen der Darstellungen 19a und 19b und insbesondere einer entsprechenden Bewegtbildsequenz den Eindruck gewinnt, dass die Vögel 95 und 96 in dem virtuellen Hintergrund 21 hinter dem realen Motiv 17 bzw. dem Schauspieler auftauchen.

Während die Steuerschaltungen 66 somit dazu ausgebildet sind, in einem jeweiligen Wiedergabefenster W1 und W2 eine jeweilige Darstellung 19a und 19b des virtuellen Hintergrunds 21 wiederzugeben, sind die Steuerschaltungen 66 ferner dazu ausgebildet, sowohl in dem Wiedergabefenster W1 als auch in dem Wiedergabefenster W2 zeitlich auf die Wiedergabe der Darstellung 19a bzw. 19b folgend das Referenzbild R1 einzublenden bzw. wiederzugeben. Bezogen auf die in dem Bildaufnahmestudio 13 erfolgende Aufnahme S werden somit alternierend die Darstellung 19 des virtuellen Hintergrunds 21 und des Referenzbilds R1 wiedergegeben, wobei die Steuerschaltungen 66 die Bildpunktelemente 35 über die Bildpunktelement-Steuereinheiten 68 entsprechend ansteuern können.

Das in Fig. 4A gezeigte Referenzbild R1 weist beispielhaft an mehreren Stellen Muster 73 auf, welche beispielsweise mittels der zugeordneten Kamera 23 abgebildet werden können. Dies kann es ermöglichen, anhand der Lagen der Muster 73 in einer von der Kamera 23 erzeugten Abbildung der Hintergrund-Wiedergabeeinrichtung 15 auf die Position der Kamera 23 in dem virtuellen Bildaufnahmestudio 13 zurückzuschließen, wobei die absoluten Positionen der Muster 73 an der Hintergrund-Wiedergabeeinrichtung 15 und somit in dem virtuellen Bildaufnahmestudio 13 dazu insbesondere bekannt sein können. Das Referenzbild R1 kann es daher ermöglichen, zusätzliche Informationen für und/oder über die Aufnahme zu gewinnen, die beispielsweise an den 3D-Rechner 63 und/oder die zentrale Steuerung 64 der Hintergrund-Wiedergabeeinrichtung 15 übermittelt werden können, so dass insbesondere der 3D-Rechner 63 die Position der Kamera 23 bei dem Generieren des virtuellen Hintergrunds 21 berücksichtigen kann. Insbesondere kann der 3D-Rechner 63 dazu auf eine Game-Engine zurückgreifen, um - ähnlich wie bei einem Computerspiel in Abhängigkeit von der Position eines Spielers - den virtuellen Hintergrund 21 in Abhängigkeit von der Position der Kamera 23 in dem virtuellen Bildaufnahmestudio 13 zu generieren. Dazu können in dem Speicher 39 beispielsweise verschiedene Datenbanken mit Modellen M gespeichert sein, um das Generieren des virtuellen Hintergrunds 21 in Abhängigkeit von der Position der Kamera 23 zu ermöglichen.

Wie Fig. 4B veranschaulicht, können die erste Darstellung 19a und die zweite Darstellung 19b in dem jeweiligen Wiedergabefenster W1 bzw. W2 für eine sich entsprechende Darstellungsdauer D wiedergegeben werden, während das Referenzbild R1 in den Wiedergabefenstern W1 und W2 für eine sich entsprechende Bildwiedergabedauer T wiedergegeben werden kann. Die Darstellungsdauer D ist größer als die Bildwiedergabedauer T, wobei die Bildwiedergabedauer T hier beispielhaft einem Zehntel einer Dauer des Wiedergabefensters W1 bzw. W2 entspricht. Die Dauer der Wiedergabefenster W1 und W2 kann insbesondere dem Reziproken der Bildwechselfrequenz F der Hintergrund-Wiedergabeeinrichtung 15 entsprechen. Es kann beispielsweise auch vorgesehen sein, eine Darstellungsdauer D von 80% des Wiedergabefensters W1 und W2 und eine Bildwiedergabedauer T von 20% des Wiedergabefensters W1 oder W2 zu wählen. Insbesondere kann das Referenzbild R1 somit lediglich kurzzeitig in den Wiedergabefenstern W1 und W2 eingeblendet werden, während der Großteil der Dauer der Wiedergabefenster W1 und W2 für die Wiedergabe der jeweiligen Darstellung 19a oder 19b des virtuellen Hintergrunds 21 zur Verfügung stehen kann.

Indem das Referenzbild R1 in dem Referenzbildspeicher 69 speicherbar und/oder gespeichert ist, kann die (Paneel-)Steuerschaltung 66 das Referenzbild R1 über den Dateneingang 70 unter Umgehung der Bildinhalt-Steuereinrichtung 65, also insbesondere des 3D-Rechners 63 und der zentralen Steuerung 64 der Hintergrund-Wiedergabeeinrichtung 15, empfangen, um dieses in den Wiedergabefenstern W1 und W2 wiederzugeben. Insbesondere muss das Referenzbild R1 somit nicht wie die jeweiligen Abschnitte P1 und P2 der Projektion P des virtuellen Hintergrunds 21 auf die aktive Beleuchtungseinrichtung 31 bzw. die Hintergrund-Wiedergabeeinrichtung 15 letztlich über den gesamten Datenpfad von dem 3D-Rechner 63 über die zentrale Steuerung 64 an die Steuerschaltungen 66 übertragen werden, sondern steht unmittelbar in dem Referenzbildspeicher 69 für eine zyklische Wiedergabe zur Verfügung. Insbesondere kann dadurch die Steuerung der Hintergrund-Wiedergabeeinrichtung 15 beschleunigt werden und die von der Bildinhalt-Steuereinrichtung 65 zu übertragende Datenmenge kann reduziert werden, indem das Referenzbild R1 nicht übertragen werden muss.

Darüber hinaus zeigt die Fig. 3, dass die Steuerschaltungen 66 mit einem jeweiligen Hintergrundbildspeicher 71 verbunden sind. Die den (Paneel-)Steuerschaltungen 66 zugeordneten Hintergrundbildspeicher 71 sind von dem der Bildinhalt-Steuereinrichtung 65 zugeordneten Speicher 39 separat ausgebildet, d.h. als getrennte physische Einheiten. Es kann vorgesehen sein, dass die jeweiligen Abschnitte P1 und P2 der zweiten Darstellung 19b des virtuellen Hintergrunds 21 während des ersten Wiedergabefensters W1 und/oder während die erste Darstellung 19a in dem ersten Wiedergabefenster W1 wiedergegeben wird mittels der Bildinhalt-Steuereinrichtung 65 in die Hintergrundbildspeicher 71 einschreibbar sind. Dadurch kann erreicht werden, dass die zweite Darstellung 19b bereits zu Beginn des zweiten Wiedergabefensters W2 für die Steuerschaltungen 66 in dem Hintergrundbildspeicher 71 zur Verfügung steht, so dass die Steuerschaltungen 66 die zweite Darstellung 19b bzw. die jeweiligen Abschnitte P1 und P2 der zweiten Darstellung 19b abrufen und die Bildpunktelemente 35 des zugeordneten Paneels 41 entsprechend ansteuern können, ohne dass zuvor noch eine Übertragung der Abschnitte P1 und P2 ausgehend von dem 3D-Rechner 63 erforderlich ist.

Darüber hinaus ist mit den Steuerschaltungen 66 ein jeweiliger zweiter Referenzbildspeicher 69a verbunden, in welchem ein zweites Referenzbild R2 speicherbar ist. Insbesondere können die Referenzbildspeicher 69 und 69a von einer gemeinsamen physischen Einheit, beispielsweise einem gemeinsamen Halbleiterspeicher, gebildet sein, so dass die Referenzbildspeicher 69 und 69a etwa verschiedene Speicherorte an dieser physischen Einheit beschreiben können. Es kann jedoch auch vorgesehen sein, dass voneinander getrennte physische Einheiten, beispielsweise zwei Halbleiterspeicher, als Referenzbildspeicher 69 und 69a mit der Steuerschaltung 66 verbunden sind.

Indem die Steuerschaltungen 66 mit zwei Referenzbildspeichern 69 und 69a verbunden sind, können insbesondere in den Wiedergabefenstern W1 und W2 sowie in darauffolgenden, in den Figuren nicht gezeigten Wiedergabefenstern, sowohl eine jeweilige Darstellung 19 des virtuellen Hintergrunds 21 als auch zwei Referenzbild R1 und R2 alternierend wiedergegeben werden. Dies ist beispielhaft für das Wiedergabefenster W1 in Fig. 5A gezeigt.

Wiederum wird zunächst die erste Darstellung 19a des virtuellen Hintergrunds 21 wiedergegeben, woraufhin die Steuerschaltung 66 die Bildpunktelemente 35 des jeweiligen zugeordneten Paneels 41 zum Wiedergeben des zweiten Referenzbilds R2 ansteuert. Das zweite Referenzbild R2 ist einfarbig und kann beispielsweise grün, blau, weiß oder schwarz sein. Die Wiedergabe eines grünen oder blauen Referenzbildes R2, bei welchem insbesondere sämtliche Bildpunktelemente 35 zum Wiedergeben derselben Farbe angesteuert werden können, kann es beispielsweise ermöglichen, zusätzlich zu der Abbildung der Darstellung 19a auch eine Greenoder Blue-Screen-Aufnahme zu erstellen, um den virtuellen Hintergrund 21 gegebenenfalls in der Post-Production ersetzen und/oder bearbeiten zu können. Durch Wiedergeben eines vollständig weißen oder vollständig schwarzen Referenzbildes R2 kann ferner beispielsweise ein Alpha-(α-) Kanal für die von der Kamera 23 erzeugte Abbildung der Hintergrund-Wiedergabeeinrichtung 15 generiert werden. Ein solcher Alpha-(α-) Kanal kann beispielsweise auch dadurch generiert werden, dass das zweite Referenzbild R2 schwarz/weiß und beispielsweise mit einem schachbrettartigen Muster dargestellt wird.

Nach der Wiedergabe des zweiten Referenzbilds R2 können die Steuerschaltungen 66 dazu ausgebildet sein, durch entsprechendes Ansteuern der Bildpunktelemente 35 das erste Referenzbild R1 mit den Mustern 73 an der Hintergrund-Wiedergabeeinrichtung 15 wiederzugeben, um eine Positionsbestimmung der Kamera 23 in dem virtuellen Bildaufnahmestudio 13 zu ermöglichen. In dem darauffolgenden Wiedergabefenster W2 kann die Reihenfolge entsprechend wiederholt werden, so dass die Steuerschaltungen 66 dazu ausgebildet sein können, während einer Aufnahme S die Bildpunktelemente 35 alternierend zum Wiedergeben der Darstellung 19 des virtuellen Hintergrunds 21, zum Wiedergeben des Referenzbildes R2 und zum Wiedergeben des Referenzbildes R1 anzusteuern. Grundsätzlich kann auch die Wiedergabe noch weiterer Referenzbilder in dem Wiedergabefenster W1 und insbesondere in sämtlichen Wiedergabefenstern während einer Aufnahme S vorgesehen sein.

Fig. 5B veranschaulicht wiederum den zeitlichen Ablauf über die Zeit t in den Wiedergabefenstern W1 und W2. Wiederum können die Darstellungen 19a und 19b in den Wiedergabefenstern W1 und W2 für eine Darstellungsdauer D wiedergegeben werden, welche größer ist als eine Bildwiedergabedauer T, mit welcher die Referenzbilder R2 und R1 in den Wiedergabefenstern W1 und W2 wiedergegeben werden. Beispielsweise kann die Darstellungsdauer D 80% des jeweiligen Wiedergabefensters W1 bzw. W2 entsprechen, während die Bildwiedergabedauer T für jedes der Referenzbilder R2 und R1 10% des Wiedergabefensters W1 bzw. W2 einnehmen kann.

Zudem ist im unteren Abschnitt der Fig. 5B veranschaulicht, dass es vorgesehen sein kann, dass das Referenzbild R1 in einer Belichtungspause C der zugeordneten Kamera 23 eingeblendet wird. Die zugeordnete Kamera 23 kann dazu ausgebildet sein, Abbildungen mit einer Bildaufnahmefrequenz zu erzeugen, welche insbesondere der Bildwechselfrequenz F der Hintergrund-Wiedergabeeinrichtung 15 entsprechen kann. Während einer solchen Bildaufnahme kann zunächst eine Belichtung E erfolgen (entsprechend einem Belichtungsfenster der Kamera 23), wobei aufeinanderfolgende Belichtungen E der Kamera 23 durch eine jeweilige Belichtungspause C voneinander getrennt sein können. Insbesondere können abwechselnd eine Belichtung E (d.h. ein Belichtungsfenster) und eine Belichtungspause C erfolgen. Es kann vorgesehen sein, dass die jeweiligen Darstellung 19a oder 19b sowie das Referenzbild R2 während einer Belichtung E der Kamera 23 an der Hintergrund-Wiedergabeeinrichtung 15 wiedergegeben werden, so dass die jeweilige von der Kamera 23 erzeugten Abbildungen sowohl die Darstellung 19a oder 19b als auch das zweite Referenzbild R2 enthalten können, um beispielsweise einen Alpha-(α-) Kanal generieren zu können. Das erste Referenzbild R1 mit den Mustern 73 kann hingegen in einer jeweiligen Belichtungspause C wiedergegeben werden, so dass die von der Kamera 23 erzeugte Abbildung nicht durch die Muster 73 gestört ist. Insbesondere kann dies vorgesehen sein, wenn in dem virtuellen Bildaufnahmestudio 13 das anhand von Fig. 2B veranschaulichte Kamerasystem 24 mit der Hilfskamera 27 genutzt wird, so dass das Referenzbild R1 und die darin enthaltenen Muster 73 von der Hilfskamera 27 abgebildet werden können, um eine Bestimmung der Position der Kamera 23 zu ermöglichen. Die von der Kamera 23 erzeugte Abbildung, welche beispielsweise als Teil einer Bewegtbildsequenz zu verwenden ist, kann hingegen ohne Störung durch die Muster 73 erzeugt werden. Hierzu kann die Kamera 23 insbesondere über die Schnittstellen 101 und 103 eine Information I an die Hintergrund-Wiedergabeeinrichtung 15 über das Belichtungsfenster E übermitteln. Diese Information I kann beispielsweise auch einen Steuerbefehl in Form eines Trigger-Signals der zugeordneten Kamera 23 umfassen und die Steuerschaltung 66 kann dazu ausgebildet sein, die Bildpunktelemente 35 in Ansprechen auf den Steuerbefehl bzw. das Trigger-Signal der zugeordneten Kamera 23 unmittelbar zum Wiedergeben des Referenzbildes R1 anzusteuern. Beispielsweise kann die Kamera 23 dazu ausgebildet sein, einen solchen Steuerbefehl bzw. ein solches Trigger-Signal in zeitlicher Relation zu den Belichtungspausen C an die Schnittstelle 103 der Hintergrund-Wiedergabeeinrichtung 15 zu übermitteln, so dass auf einfache Weise erreicht werden kann, dass das Referenzbild R1 während der Belichtungspausen C und somit außerhalb der Belichtungen E wiedergegeben wird.

Während in dem anhand der Figuren veranschaulichten Ausführungsbeispiel die Steuerschaltungen 66 als Paneel-Steuerungen ausgebildet sind, kann es auch vorgesehen sein, dass die

Steuerschaltungen 66 als Bildpunktelement-Steuereinrichtungen 68 ausgebildet sind. Bei solchen Ausführungsformen können folglich die Bildpunktelement-Steuereinrichtungen 68 mit einem Referenzbildspeicher 69 und/oder einem weiteren Referenzbildspeicher 69a verbunden sein, so dass die Referenzbilder R1 und R2 auch unmittelbar an den Bildpunktelement-Steuereinrichtungen 68 zur Verfügung stehen können.

### Bezuaszeichenliste

- 1: Bildsensor
- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 19a: erste Darstellung
- 19b: zweite Darstellung
- 21: virtueller Hintergrund
- 23: Kamera
- 24: Kamerasystem
- 27: Hilfskamera
- 31: Beleuchtungseinrichtung
- 33: LED-Wand
- 35: Bildpunktelement
- 37: Steuereinrichtung
- 39: Speicher
- 41: Paneel
- 43: dreidimensionale Szene
- 44: Leuchtdiode
- 49: Wiedergabeeinrichtung
- 51: Eingabeeinrichtung
- 53: Kamerakörper
- 59: Kameraobjektiv, Wechselobjektiv
- 63: 3D-Rechner
- 64: zentrale Steuerung
- 65: Bildinhalt-Steuereinrichtung
- 66: Steuerschaltung
- 68: Bildpunktelement-Steuereinrichtung
- 69: Referenzbildspeicher
- 69a: weiterer Referenzbildspeicher
- 70: Dateneingang
- 71: Hintergrundbildspeicher
- 73: Muster
- 79: Sucher
- 81: Objektivring
- 83: Objektiv-Stellmotor
- 85: Objektivring-Antriebseinheit
- 89: Kopplungsstange
- 87: Haltestange
- 91: erstes Objekt
- 92: zweites Objekt
- 93: drittes Objekt
- 94: viertes Objekt
- 95: fünftes Objekt
- 96: sechstes Objekt
- 97: Ausleseschaltung
- 99: Signalausgang
- 101: Schnittstelle
- 103: Schnittstelle
- B: Bilddatensatz
- C: Belichtungspause
- D: Darstellungsdauer
- E: Belichtungsfenster
- F: Bildwechselfrequenz
- I: Information
- M: Modell
- P: Projektion
- P1: Abschnitt der Projektion
- P2: Abschnitt der Projektion
- R1: Referenzbild
- R2: Referenzbild
- S: Aufnahme
- T: Bildwiedergabedauer
- W1: erstes Wiedergabefenster
- W2: zweites Wiedergabefenster
- x: Koordinate
- y: Koordinate
- z: Koordinate

## Patentansprüche

1. Hintergrund-Wiedergabeeinrichtung (15) für ein virtuelles Bildaufnahmestudio (13), welche dazu ausgebildet ist, für eine Aufnahme mittels einer zugeordneten Kamera (23) hinter einem realen Motiv (17) eine Darstellung (19) eines virtuellen Hintergrunds (21) wiederzugeben,
wobei die Hintergrund-Wiedergabeeinrichtung (15) zumindest ein Paneel (41) mit einer Vielzahl aktiv leuchtender Bildpunktelemente (35) in einer zumindest zweidimensionalen Anordnung und eine Steuerschaltung (66) aufweist,
wobei die Steuerschaltung (66) dazu ausgebildet ist, die Bildpunktelemente (35) alternierend zum Wiedergeben zumindest eines Teils der Darstellung (19) des virtuellen Hintergrunds (21) und zum Wiedergeben eines Referenzbildes (R1, R2) anzusteuern, welches nicht den virtuellen Hintergrund (21) repräsentiert,
wobei die Steuerschaltung (66) einen Referenzbildspeicher (69) aufweist, in welchem das Referenzbild (R1, R2) speicherbar ist.

2. Hintergrund-Wiedergabeeinrichtung (15) nach Anspruch 1,
wobei die aktive Hintergrund-Wiedergabeeinrichtung (15) als eine LED-Wand (33) ausgebildet ist und wobei die Bildpunktelemente (35) als Leuchtdioden (44) oder als Leuchtdiodeneinheiten ausgebildet sind; und/oder
wobei sich die Hintergrund-Wiedergabeeinrichtung (15) in einer vertikalen und/oder horizontalen Ausrichtung erstreckt; und/oder
wobei die Steuerschaltung (66) dazu ausgebildet ist, die Darstellung (19) des virtuellen Hintergrunds (21) mit einer vorgegebenen oder vorgebbaren Bildwechselfrequenz (F) zu aktualisieren.

3. Hintergrund-Wiedergabeeinrichtung (15) nach Anspruch 1 oder 2,
wobei die Steuerschaltung (66) dazu ausgebildet ist, sämtliche Bildpunktelemente (35) des zumindest einen Paneels (41) individuell anzusteuern; oder
wobei die Bildpunktelemente (35) des zumindest einen Paneels (41) in mehrere Gruppen von Bildpunktelementen (35) unterteilt sind, wobei die Steuerschaltung (66) dazu ausgebildet ist, die Bildpunktelemente (35) einer der mehreren Gruppen individuell anzusteuern.

4. Hintergrund-Wiedergabeeinrichtung (15) nach einem der vorhergehenden Ansprüche, wobei das Referenzbild (R1, R2) einfarbig, insbesondere grün, blau, weiß oder schwarz, ist; oder wobei das Referenzbild (R1, R2) zweifarbig ist, insbesondere schwarz und weiß, und/oder zumindest ein Muster (73) aufweist.

5. Hintergrund-Wiedergabeeinrichtung (15) nach einem der vorhergehenden Ansprüche, wobei die Steuerschaltung (66) dazu ausgebildet ist, zum Wiedergeben eines Übergangs von einer ersten Darstellung (19a) des virtuellen Hintergrunds (21) zu einer zweiten Darstellung (19b) des virtuellen Hintergrunds (21) in einem ersten Wiedergabefenster (W1) die Bildpunktelemente (35) zum Wiedergegeben der ersten Darstellung (19a) und in einem darauffolgenden zweiten Wiedergabefenster (W2) die Bildpunktelemente (35) zum Wiedergegeben der zweiten Darstellung (19b) anzusteuern,
wobei die Steuerschaltung (66) insbesondere mit einem Hintergrundbildspeicher (71) verbunden ist, in welchen die zweite Darstellung (19b) während des ersten Wiedergabefensters (W1) einschreibbar und/oder gespeichert ist.

6. Hintergrund-Wiedergabeeinrichtung (15) nach Anspruch 5,
wobei die Steuerschaltung (66) dazu ausgebildet ist, die Bildpunktelemente (35) während des ersten Wiedergabefensters (W1) sowohl zum Wiedergeben der ersten Darstellung (19a) des virtuellen Hintergrunds (21) als auch zum Wiedergeben des Referenzbildes (R1, R2) anzusteuern; und/oder
wobei die Steuerschaltung (66) dazu ausgebildet ist, die Bildpunktelemente (35) während des ersten Wiedergabefensters (W1) zunächst zum Wiedergeben der ersten Darstellung (19a) und daraufhin zum Wiedergeben des Referenzbildes (R1, R2) anzusteuern, oder umgekehrt; und/oder
wobei die Steuerschaltung (66) dazu ausgebildet ist, die Bildpunktelemente (35) während des ersten Wiedergabefensters (W1) für eine Darstellungsdauer (D) zum Wiedergeben der ersten Darstellung (19a) und für eine Bildwiedergabedauer (T) zum Wiedergeben des Referenzbildes (R1, R2) anzusteuern, wobei die Darstellungsdauer (D) größer als die Bildwiedergabedauer (T) ist oder der Bildwiedergabedauer (T) entspricht; und/oder
wobei die Steuerschaltung (66) mit einem weiteren Referenzbildspeicher (69a) verbunden ist, in welchem ein weiteres Referenzbild (R2) gespeichert ist, wobei die Steuerschaltung (66) dazu ausgebildet ist, die Bildpunktelemente (35) während des ersten Wiedergabefensters (W1) zum Wiedergeben der ersten Darstellung (19a) des virtuellen Hintergrunds (21), zum Wiedergeben des Referenzbildes (R1) und zum Wiedergeben des weiteren Referenzbildes (R2) anzusteuern.

7. Hintergrund-Wiedergabeeinrichtung (15) nach Anspruch 5 oder 6,
wobei die Hintergrund-Wiedergabeeinrichtung (15) eine Schnittstelle (103) zum Empfangen einer Information (I) über ein Belichtungsfenster (E) der zugeordneten Kamera (23) aufweist, wobei die Steuerschaltung (66) dazu ausgebildet ist, die Bildpunktelemente (35) außerhalb des Belichtungsfensters (E) der zugeordneten Kamera (23) zum Wiedergeben des Referenzbildes (R1, R2) anzusteuern.

8. Hintergrund-Wiedergabeeinrichtung (15) nach einem der Ansprüche 5 bis 7,
wobei die Steuerschaltung (66) dazu ausgebildet ist, die Bildpunktelemente (35) während des zweiten Wiedergabefensters (W2) sowohl zum Wiedergeben der zweiten Darstellung (19b) des virtuellen Hintergrunds (21) als auch zum Wiedergeben des Referenzbildes (R1) anzusteuern.

9. Hintergrund-Wiedergabeeinrichtung (15) nach einem der vorhergehenden Ansprüche, wobei die Hintergrund-Wiedergabeeinrichtung (15) eine Bildinhalt-Steuereinrichtung (65) aufweist, wobei die Bildinhalt-Steuereinrichtung (65) dazu ausgebildet ist, den virtuellen Hintergrund (21) zu generieren, eine Projektion (P) des virtuellen Hintergrunds (21) auf die zweidimensionale Anordnung der Bildpunktelemente (35) zu ermitteln und die ermittelte Projektion (P) an die Steuerschaltung (66) zu übermitteln,
wobei die Bildinhalt-Steuereinrichtung (65) insbesondere dazu ausgebildet ist, sich verändernde Darstellungen (19) des virtuellen Hintergrunds (21) in einen mit der Steuerschaltung (66) verbundenen Hintergrundbildspeicher (71) einzuschreiben.

10. Hintergrund-Wiedergabeeinrichtung (15) nach Anspruch 9,
wobei die Steuerschaltung (66) einen Dateneingang (70) aufweist, über den das Referenzbild (R1) unter Umgehung der Bildinhalt-Steuereinrichtung (65) an die Steuerschaltung (66) übertragbar ist.

11. Hintergrund-Wiedergabeeinrichtung (15) nach einem der vorhergehenden Ansprüche, wobei die Hintergrund-Wiedergabeeinrichtung (15) mehrere Paneele (41) umfasst, wobei jedes der mehreren Paneele (41) rechteckig und randlos ausgebildet ist, wobei die mehreren Paneele (41) in einer zumindest zweidimensionalen Matrix angeordnet sind; und/oder
wobei die Steuerschaltung (66) dazu ausgebildet ist, die Bildpunktelemente (35) direkt anzusteuern, oder wobei die Steuerschaltung (66) mit mehreren Bildpunktelement-Steuereinrichtungen (68) verbunden ist, wobei jede der mehreren Bildpunktelement-Steuereinrichtungen (68) dazu ausgebildet ist, eine jeweilige Gruppe von Bildpunktelementen (35) anzusteuern, wobei die Steuerschaltung (66) dazu ausgebildet ist, die Bildpunktelemente (35) mittels der mehreren Bildpunktelement-Steuereinrichtungen (68) anzusteuern.

12. Hintergrund-Wiedergabeeinrichtung (15) für ein virtuelles Bildaufnahmestudio (13), welche dazu ausgebildet ist, für eine Aufnahme mittels einer zugeordneten Kamera (23) hinter einem realen Motiv (17) eine Darstellung (19) eines virtuellen Hintergrunds (21) wiederzugeben,
wobei die Hintergrund-Wiedergabeeinrichtung (15) zumindest ein Paneel (41) mit einer Vielzahl aktiv leuchtender Bildpunktelemente (35) in einer zweidimensionalen Anordnung, eine Bildinhalt-Steuereinrichtung (65) und eine Steuerschaltung (66) aufweist, wobei die Bildinhalt-Steuereinrichtung (65) dazu ausgebildet ist, den virtuellen Hintergrund (21) zu generieren, eine Projektion (P) des virtuellen Hintergrunds (21) auf die zweidimensionale Anordnung der Bildpunktelemente (35) zu ermitteln und die ermittelte Projektion (P) an die Steuerschaltung (66) zu übermitteln,
wobei die Steuerschaltung (66) dazu ausgebildet ist, die Bildpunktelemente (35) alternierend zum Wiedergeben zumindest eines Teils der Darstellung (19) des virtuellen Hintergrunds (21) und zum Wiedergeben eines Referenzbildes (R1) anzusteuern, welches nicht den virtuellen Hintergrund (21) repräsentiert,
wobei die Steuerschaltung (66) einen Dateneingang (70) aufweist, über den das Referenzbild (R1) unter Umgehung der Bildinhalt-Steuereinrichtung (65) an die Steuerschaltung (66) übertragbar ist.

13. Hintergrund-Wiedergabeeinrichtung (15) nach Anspruch 12,
wobei die Steuerschaltung (66) einen Referenzbildspeicher (69) aufweist, in dem das Referenzbild (R1) speicherbar ist; und/oder
wobei die Hintergrund-Wiedergabeeinrichtung (15) eine Schnittstelle (103) zum Empfangen einer Information (I) über ein Belichtungsfenster (E) der zugeordneten Kamera (23) aufweist, wobei die Steuerschaltung (66) dazu ausgebildet ist, die Bildpunktelemente (35) außerhalb des Belichtungsfensters (E) der zugeordneten Kamera (23) zum Wiedergeben des Referenzbildes (R1, R2) anzusteuern.

14. Aufnahmesystem (10) mit einer Hintergrund-Wiedergabeeinrichtung (15) nach einem der vorhergehenden Ansprüche und mit einer zugeordneten Kamera (23), wobei die Steuerschaltung (66) der Hintergrund-Wiedergabeeinrichtung (15) dazu ausgebildet ist, über eine Schnittstelle (103) der Hintergrund-Wiedergabeeinrichtung (15) einen Steuerbefehl zum Wiedergeben des Referenzbildes (R1, R2) zu empfangen und die Bildpunktelemente (35) in Ansprechen auf den Steuerbefehl zum Wiedergeben des Referenzbildes (R1, R2) anzusteuern.

15. Aufnahmesystem (10) nach Anspruch 14,
wobei die Kamera (23) dazu ausgebildet ist, den Steuerbefehl in Abhängigkeit von einer Belichtungspause (C) der Kamera, insbesondere während oder zu Beginn einer Belichtungspause (C), an die Schnittstelle (103) der Hintergrund-Wiedergabeeinrichtung (15) zu übermitteln.
